(19) Europäisches Patentamt / European Patent Office / Office européen des brevets

(11) **EP 2 299 137 B1**

(12) **EUROPEAN PATENT SPECIFICATION**

(45) Date of publication and mention
of the grant of the patent:
**19.08.2015 Bulletin 2015/34**

(51) Int Cl.:
*F16D 13/58* *(2006.01)* *F16D 13/48* *(2006.01)*

(21) Application number: **10176348.0**

(22) Date of filing: **13.09.2010**

(54) **Clutch apparatus**

Kupplungsvorrichtung

Appareil à embrayage

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.09.2009 JP 2009216734**

(43) Date of publication of application:
**23.03.2011 Bulletin 2011/12**

(73) Proprietor: **AISIN SEIKI KABUSHIKI KAISHA
Kariya-shi, Aichi 448-8650 (JP)**

(72) Inventors:
• **Hisaeda, Yusuke
Kariya-shi Aichi 448-8650 (JP)**

• **Kida, Tokiyoshi
Kariya-shi Aichi 448-8650 (JP)**

(74) Representative: **Kramer Barske Schmidtchen
Patentanwälte PartG mbB
European Patent Attorneys
Landsberger Strasse 300
80687 München (DE)**

(56) References cited:
**GB-A- 2 280 001       US-A- 4 712 659
US-A1- 2003 047 405**

## Description

### TECHNICAL FIELD

This disclosure generally relates to a clutch apparatus, which engageably and disengageably connects an input shaft and an output shaft. More specifically, this disclosure pertains to the clutch apparatus having flexibility in a clutch operation characteristic.

### BACKGROUND

Generally, a clutch apparatus is provided on a power transmission pathway between an engine and a transmission apparatus of a vehicle in order not to transmit a rotational force of the engine to the transmission apparatus when the engine is started, when a speed is changed and the like. The known clutch apparatus is configured so as to transmit a clutch operation force thereto via a mechanism such as a hydraulic pressure mechanism, a link mechanism and the like in response to a manual operation applied to an operation mechanism such as a clutch lever, a clutch pedal and the like (a manually operation of the clutch lever, a depressing operation of the clutch pedal and the like), so that a connection between the engine and the transmission apparatus is establishable and interruptible by means of the clutch apparatus. For example, a clutch apparatus disclosed in JPH8-105457A is configured so as to engage a clutch in a manner where a clutch disc is sandwiched by a flywheel and a pressure plate and then, the pressure plate is pressed by an elastic force of a diaphragm spring, which is rotatably supported by a clutch cover rotating with the flywheel as a unit. Furthermore, the clutch apparatus disclosed in JPH8-105457A is configured so as to disengage the clutch in a manner where one end portion of a clutch release fork, which is pivotally supported by a clutch housing, is pressed by a piston rod, which is provided at a clutch operating cylinder attached at the clutch housing, so that the diaphragm is pressed. Furthermore, according to the clutch apparatus disclosed in JPH8-105457A, a diaphragm spring is provided within the clutch cover. The diaphragm spring reduces a load applied to the clutch apparatus by a torque capacity by using the principle of the lever. A lever ratio of the diaphragm spring is a fixed value, which is determined on the basis of a space formed within the clutch housing in an axial direction and the like.

Generally, the principle of the lever is applied to the operation mechanism in order to increase the lever ratio, so that an operation load is reduced when the clutch apparatus is operated. Furthermore, there exists a clutch apparatus having an assist mechanism for assisting an operation force of an operation mechanism in order to further reduce an operation load applied to the operation mechanism.

Disclosed in JPH9-315174A is an operation pedal depressing force reduction apparatus, which is configured as an operation pedal of a clutch, which is rotatably attached at a vehicle body member via a support shaft. According to the operation pedal depressing force reduction apparatus disclosed in JPH9-315174A, an assist spring, which is configured with a compression coil spring for applying an assisting force in a depressing direction to the operation pedal after the operation pedal is depressed by a predetermined stroke, is provided between the operation pedal and a vehicle body member arranged in front of the operation pedal. A pedal-side support portion, which has a round-shaped portion at an end portion of a shaft portion thereof, and a vehicle body-side support portion, which has a round-shaped portion at an end portion of a shaft portion thereof, are attached at the operation pedal and the vehicle body member, which is arranged in front of the operation pedal, respectively, so that the round-shaped portions of the respective pedal-side support portion and the vehicle body-side support portion face each other. A pedal-side spring receiver, which is formed to have a round-shaped recessed portion at an intermediate portion thereof and a spring receiver surface extending from an outer circumferential surface of the round-shaped recessed portion, is attached at the pedal-side support member in a manner where the round-shaped portion of the pedal-side support member is fit into the round-shaped recessed portion of the pedal-side spring receiver. Similarly, a vehicle body-side spring receiver, which is formed to have a round-shaped recessed portion at an intermediate portion thereof and a spring receiver surface extending from an outer circumferential surface of the round-shaped portion, is attached at the vehicle body-side support portion in a manner where the round-shaped portion of the vehicle body-side support portion is fit into the round-shaped recessed portion of the vehicle body-side spring receiver. The assist spring is provided between the pedal-side support portion and the vehicle body-side support portion in a manner where on end portion of the assist spring is attached at the spring receiver surface of the pedal-side spring receiver and the other end portion of the assist spring is attached at the spring receiver surface of the vehicle body-side spring receiver. Accordingly, the spring receiver surface of the pedal-side spring receiver is positioned rearwardly of the round-shaped portion of the pedal-side support portion. Furthermore, the spring receiver surface of the operation vehicle body-side spring receiver is positioned forwardly of the round-shaped portion of the vehicle-body side support portion. According to the operation pedal depressing force reduction apparatus disclosed in JPH9-315174A, the assist spring generating a high output may be used at the operation pedal depressing force reduction apparatus while simplifying a structure thereof, so that a depression force generated when the operation pedal is depressed may be greatly reduced. Therefore, according to the operation pedal depressing force reduction apparatus disclosed in JPH9-315174A, a rapid increase in the pedal depressing force to occur in a final phase of returning the operation pedal may be avoided, even if the assist spring generating the high output is used. As a result, a pedal operation feeling may be improved and the depressing force in an initial phase of depressing the operation pedal may be reduced.

Disclosed in JP2002-181075A is a clutch operation mechanism for operating a clutch provided at a vehicle. According to the clutch operation mechanism disclosed in JP2002-181075A, an operation force assisting member for a clutch operation portion is provided between the clutch operation portion and a frame of the vehicle. A gas spring is adapted as the operation force assisting member. Accordingly, an operator may operate the clutch operation portion by applying less depressing force, so that a drive operation feeling may be improved. Furthermore, according to the clutch operation mechanism disclosed in JP2002-181075A, because a pedal stroke does not need to be increased in order to decrease a depression operating load, an operability of the clutch operation mechanism may be improved and the operator may feel less tired when operating a clutch pedal.

The lever ratio of the diaphragm provided within the clutch cover is the fixed value, which is determined on the basis of the space formed within the clutch housing in the axial direction and the like. A load-stroke characteristic of a release bearing (i.e. a characteristic of a relationship between a load applied to the release bearing and a stroke applied to the release bearing), which presses an inner circumferential end portion of the diaphragm, is greatly influenced by a load characteristic of the diaphragm. Therefore, the clutch apparatus disclosed in, for example, JPH8-105457A has less flexibility in tuning. Hence, an idealistic load-stroke characteristic for the operation mechanism may not be obtained.

Furthermore, according to an assist operation for the operation force performed by the assist mechanism of the operation mechanism according to the abovementioned known clutch apparatus (e.g. JPH8-105457A, JPH9-315174A and JP2002-181075A), because the lever ratio (or a pedal ratio) is constant and an assist characteristic is influenced by a characteristic of the assist spring (or the gas spring) of the assist mechanism, the known clutch mechanism has less flexibility in tuning. Therefore, the idealistic load-stroke characteristic for the operation mechanism may not be obtained.

US 2003/0047405 A1 discloses a clutch apparatus according to the preamble of appended independent claims. In this known clutch apparatus a plurality of clutch levers transmit force to the pressure plate of the clutch. The lever ratio is variable as the clutch changes from an engaged to a disengaged state. When the clutch is engaged, the lever ratio of the clutch levers is relatively large. When the clutch is disengaged the levers lift from the pressure plate and disengage the pressure plate from the clutch disks. When the clutch is disengaged the lever ratio is relatively small, allowing for more clearance between the pressure plate and the flywheel and an increase in pressure plate lift.

A need exits to provide a clutch apparatus with a small size and a great flexibility in a load-stroke characteristic of a release bearing and being simply to be assembled.

SUMMARY

According to a first aspect of this disclosure the need as pointed out above is fulfilled with a clutch apparatus according to claim 1.

According to a second aspect of this disclosure the need as pointed out above is fulfilled with a clutch apparatus according to claim 2.

Claims 3 to 5 are directed towards further embodiments of the clutch apparatus according to the first and the second aspects.

According to a third aspect of this disclosure the need as stated above is fulfilled with a clutch apparatus according to claim 5.

Claims 6 to 8 are directed towards further embodiments of the clutch apparatus according to the second aspect.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a cross-sectional diagram schematically illustrating a configuration of a clutch apparatus according to a first embodiment taken along line I-I in Fig. 2;

Fig. 2 is a plane view schematically illustrating the configuration of the clutch apparatus according to the first embodiment when being viewed in an axial direction (in a direction indicated by an arrow in Fig. 1);

Fig. 3 is a diagram for explaining an operation of the clutch apparatus according to the first embodiment;

Fig. 4 is a diagram for explaining changes in a lever ratio of a first release lever and a lever ratio of a second release lever of the clutch apparatus according to the first embodiment;

Fig. 5 is a diagram illustrating a load characteristic of a release bearing of the clutch apparatus according to the first embodiment;

Fig. 6 is a cross-sectional diagram schematically illustrating a configuration of a clutch apparatus according to a second embodiment taken along line VI-VI in Fig. 7;

Fig. 7 is a plane view schematically illustrating the configuration of the clutch apparatus according to the second embodiment when being viewed in an axial direction (i.e. in a direction indicated by an arrow in Fig. 6);

Fig. 8 is a cross-sectional diagram schematically illustrating a configuration of a clutch apparatus according to a third embodiment taken along line VIII-VIII in Fig. 9;

Fig. 9 is a plane view schematically illustrating the configuration of the clutch apparatus according to the third embodiment when being viewed in an axial direction (i.e. in a direction indicated by an arrow in Fig. 8);

Fig. 10 is a diagram for explaining an operation of the clutch apparatus according to the third embodiment;

Fig. 11 is a cross-sectional diagram schematically illustrating a configuration of a clutch apparatus according to a fourth embodiment taken along line XI-XI in Fig. 12;

Fig. 12 is a plane view schematically illustrating the configuration of the clutch apparatus according to the fourth embodiment when being viewed in an axial direction (i.e. in a direction indicated by an arrow in Fig. 11);

Fig. 13 is a cross-sectional diagram schematically illustrating a configuration of a clutch apparatus according to a fifth embodiment taken along line XIII-XIII in Fig. 14;

Fig. 14 is a plane view schematically illustrating the configuration of the clutch apparatus according to the fifth embodiment when being viewed in an axial direction (i.e. in a direction indicated by an arrow in Fig. 13);

Fig. 15 is a diagram for explaining an operation of the clutch apparatus according to the fifth embodiment;

Fig. 16 is a schematic diagram for explaining a change in an assist lever ratio of a release lever of the clutch apparatus according to the fifth embodiment;

Fig. 17 is a graph illustrating a load characteristic of a release bearing of the clutch apparatus according to the fifth embodiment;

Fig. 18 is a cross-sectional diagram schematically illustrating a configuration of a clutch apparatus according to a sixth embodiment taken along line XVIII-XVIII in Fig. 19;

Fig. 19 is a plane view schematically illustrating the configuration of the clutch apparatus according to the sixth embodiment when being viewed in an axial direction (i.e. in a direction indicated by an arrow in Fig. 18);

Fig. 20 is a cross-sectional diagram schematically illustrating a configuration of a clutch apparatus according to a seventh embodiment taken along line XX-XX in Fig. 21;

Fig. 21 is a plane view schematically illustrating the configuration of the clutch apparatus according to the seventh embodiment when being viewed in an axial direction (i.e. in a direction indicated by an arrow in Fig. 20);

Fig. 22 is a cross-sectional diagram schematically illustrating a configuration of a clutch apparatus according to an eighth embodiment taken along line XXII-XXII in Fig. 23; and

Fig. 23 is a plane view schematically illustrating the configuration of the clutch apparatus according to the eighth embodiment when being viewed in an axial direction (i.e. in a direction indicated by an arrow in Fig. 22).

DETAILED DESCRIPTION

[Brief overview]

A clutch apparatus according to embodiments includes a flywheel (5), a pressure plate (28) arranged so as to face the flywheel, a clutch disc (10) provided between the flywheel and the pressure plate, a clutch cover (20) rotated with the flywheel as a unit, a variable lever ratio mechanism (4), which is provided within the clutch cover, having a force input point (25a) to which an operation load is inputted, a force output point (21c) at which the pressure plate is pressed towards the flywheel, and a lever (21, 25) whose lever ratio is variable, and a disc spring (23) for biasing the variable lever ratio mechanism so that the variable lever ratio mechanism presses the pressure plate towards the flywheel at the force output point.

[First embodiment]

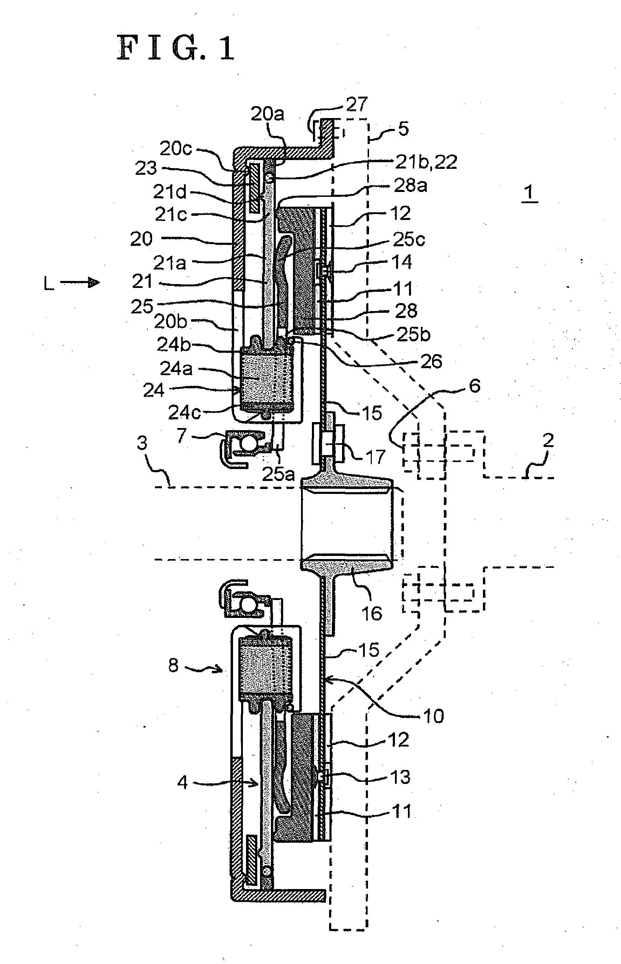

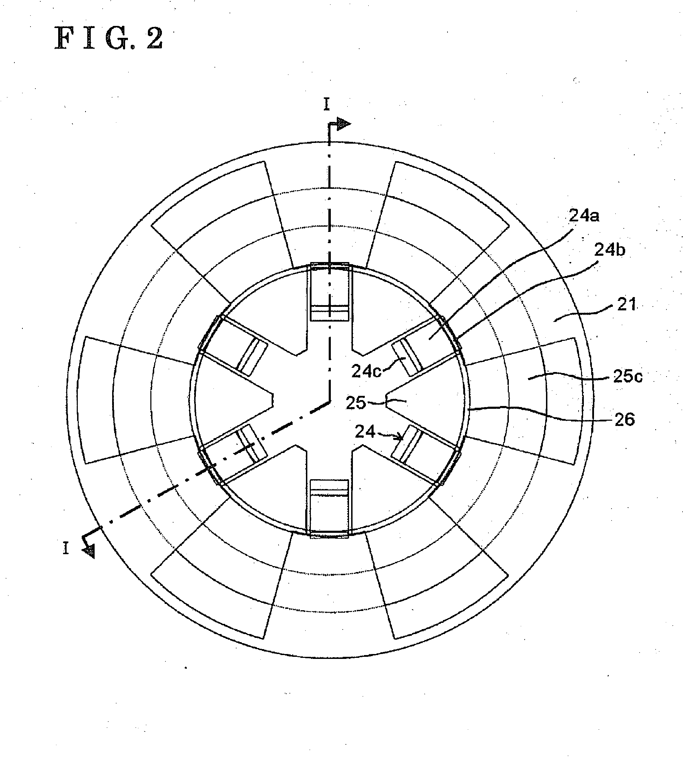

A clutch apparatus 1 according to a first embodiment will be described below with reference to the attached drawings. Illustrated in Fig. 1 is a cross-sectional diagram schematically illustrating a configuration of the clutch apparatus 1 according to the first embodiment taken along line I-I in Fig. 2. Illustrated in Fig. 2 is a plane view schematically illustrating the configuration of the clutch apparatus 1 when being viewed in an axial direction thereof (i.e. in a direction indicated by an arrow L in Fig. 1). Additionally, illustrated in Fig. 1 is the clutch apparatus 1 in an engaged state. A first release lever 21, an assist spring 24, a second release lever 25 and a fulcrum member 26 of the clutch apparatus 1 are mainly illustrated in Fig. 2.

The clutch apparatus 1 connects an input shaft 2 (e.g. a crankshaft of an engine and the like) with an output shaft 3 (e.g. an input shaft of a transmission apparatus and the like) in a manner where a connection therebetween is interruptible and establishable. As illustrated in Fig. 1, the clutch apparatus 1 includes a variable lever ratio mechanism 4 and an assist mechanism 8. The variable lever ratio mechanism 4 includes the first and second release levers 21 and 25, which are provided within a clutch cover 20 and which are configured so that lever ratios thereof are variable. The assist mechanism 8 for assisting an operation load is provided within the clutch cover 20. Furthermore, the assist mechanism 8 links to the assist spring 24. The clutch apparatus 1 is provided on a power transmission pathway between the input shaft 2 and the output shaft 3, which are arranged in a co-axial manner. Furthermore, the clutch apparatus 1 includes a flywheel 5, a release bearing 7, a clutch disc 10, the clutch cover 20, the first release lever 21, a support member 22, a disc spring 23, the assist spring 24, the second release lever 25, the fulcrum member 26 and a pressure plate 28 as major components of the clutch apparatus 1.

The flywheel 5 is formed in a disc plate made of cast iron. The flywheel 5 is fixed on the input shaft 2 by means of plural bolts 6, so that the flywheel is rotated together with the input shaft 2 as a unit. Furthermore, the clutch cover 20 is fixed on a radially outer circumferential surface of the flywheel 5 facing the output shaft 3 (facing left in Fig. 1) by means of plural bolts 27, so that the clutch cover 20 is rotated together with the flywheel 5 as a unit. The flywheel 5 press-contacts a friction material 12 of the clutch disc 10 at an intermediate portion of a surface of the flywheel 5 facing the output shaft 3 (facing the left in Fig. 1) while the clutch disc 10 is pressed towards the flywheel 5 by means of the pressure plate 28. Additionally, the flywheel 5 slidably contacts the friction material 12 of the clutch disc 10 in a case where a pressing force applied to the clutch disc 10 is low.

A ball bearing formed in a ring shape is adapted as the release bearing 7. The release bearing 7 is arranged so as to surround an outer circumferential surface of the output shaft 3. Furthermore, the release bearing 7 is configured so as to be displaceable in an axial direction of the clutch apparatus 1 (i.e. in a right-left direction in Fig. 1) via a mechanism such as a hydraulic pressure mechanism, a link mechanism and the like in response to a manual operation of an operation portion such as a clutch lever, a clutch pedal and the like (e.g. the manual operation of the clutch lever, a depressing operation of the clutch pedal and the like). In this embodiment, plural balls are disposed between an outer race and an inner race of the release bearing 7 (see Fig. 1). The outer race is operated in the axial direction by the mechanism such as the hydraulic pressure mechanism, the link mechanism and the like. On the other hand, the inner race is rotated together with the second release lever 25 as a unit.

The clutch disc 10, which formed in a disc shape, transmits a rotational force generated by the engine to the output shaft 3 via the input shaft 2. The clutch disc 10 includes a friction material 11, the friction material 12 and a disc plate 15, which is formed in a disc shape. The friction materials 11 and 12 are fixed on side surfaces of the disc plate 15 (i.e. surfaces facing the input shaft 2 and the output shaft 3, respectively) at an outer circumferential portion thereof in a radial direction thereof by means of rivets 13 and 14, respectively. Furthermore, an inner circumferential portion of the disc plate 15 in the radial direction thereof is fixed at an outer circumferential portion of a hub member 16 by means of plural rivets 17. An inner circumferential portion of the hub member 16 is spline-engaged with the output shaft 3 so as not to be rotatable relative to the output shaft 3 (i.e. so as to be rotatable together with the output shaft 3 as a unit) and so as to be movable in the axial direction. The clutch disc 10 is provided between the flywheel 5 and the pressure plate 28, so that the pressure plate 28 press-contacts the friction material 11 and the flywheel 5 press-contacts the friction material 12 while the clutch disc 10 is pressed towards the flywheel 5 by means of the pressure plate 28. Additionally, the pressure plate 28 slidably contacts the friction material 11 and the flywheel 5 slidably contacts the friction material 12 while the pressing force applied to the pressure plate 28 is low. The clutch disc 10 may be configured so as to include a mechanism for absorbing a torque fluctuation occurring between the input shaft 2 and the output shaft 3.

The clutch cover 20 is formed in a circular shape and pivotally supports the first and second release levers 21 and 25. An outer circumferential portion of the clutch cover 20 in a radial direction thereof is fixed on the flywheel 5 by means of the plural bolts 27, so that the clutch cover 20 is rotated together with the flywheel 5 as the unit. The clutch cover 20 is formed so that an inner circumferential portion thereof is spaced away from the flywheel 5 in the axial direction of the clutch apparatus 1. Furthermore, the clutch cover 20 includes a support portion 20a for supporting the support member 22, which includes a fulcrum portion 21b of the first release lever 21, at the outer circumferential portion of the clutch cover 20. The clutch cover 20 also includes a support portion 20b for supporting the fulcrum member 26, which supports a fulcrum portion 25b of the second release lever 25, at the inner circumferential portion of the clutch cover 20. The support portion 20b pivotally retains a seat portion 24c of the assist spring 24. Still further, the clutch cover 20 includes a protruding portion 20c for supporting one end portion of the disc spring 23. The clutch cover 20 is formed so as not to contact the first and second release levers 21 and 25 and the assist spring 24 while the second release lever 25 and the assist spring 24 pivot.

The first release lever 21, which is formed in a substantially annular shape, is pivotally supported by the clutch cover 20. The first release lever 21 is provided between the pressure plate 28 and the disc spring 23. Furthermore, the first release lever 21 includes a variable force input portion 21a. A pressing force generated by a variable force output portion 25c of the second release lever 25 is applied to a surface of the variable force input portion 21 a at an inner circumferential portion facing the pressure plate 28. The variable force input portion 21a is displaced together with the variable force output portion 25c in response to an inclination of the second release lever 25. The first release lever 21 includes the fulcrum portion 21b, which is pivotally retained by the support member 22, at a radially outer end portion. The first release lever 21 includes a force output portion 21c at a position radially inwardly of the support member 22. A protruding portion 28a of the pressure plate 28 contacts the force output portion 21c of the first release lever 21 at the surface of the first release lever 21 facing the pressure plate 28. The first release lever 21 is a component of the variable lever ratio mechanism 4. The first release lever 21 is configured so that the variable force input portion 21 a is displaced in a radially outer direction in response to a displacement of a pressing position of the variable force output portion 25c of the second release lever 25 in a radially outer direction relative to the variable force input portion 21a occurring as the outer circumferential portion of the second release lever 25 inclines towards the first release lever 21. However, the fulcrum portion 21b and the force output portion 21c are not displaced (are considered not to be displaced) in the radial direction. Accordingly, the lever ratio is changeable. The first release lever 21 includes a protruding portion 21d on the outer circumferential portion of a surface of the first release lever 21 facing opposite to the pressure plate 28, so that the protruding portion 21d is positioned at a radially outer side relative to the pressure plate 28. The first release lever 21 is biased towards the pressure plate 28 at the protruding portion 21d by means of the disc spring 23. Furthermore, the first release lever 21 is configured so that the inner circumferential portion thereof pivots towards the pressure plate 28 about the fulcrum portion 21b as a fulcrum and biases the protruding portion 28a of the pressure plate 28 at the force output portion 21c, while the first release lever 21 is biased by the disc spring 23. On the other hand, in a case where the variable force input portion 21 a is pressed by the variable force output portion 25c of the second release lever 25, the inner circumferential portion of the first release lever 21 pivots away from the pressure plate 24 about the fulcrum portion 21b as the fulcrum, which simultaneously compresses the disc spring 23, so that a biasing by the protruding portion 28a of the pressure plate 28 applied to the force output portion 21c is cancelled.

The first release lever 21 is pivotally supported by the seat portion 24b of the assist spring 24 at an inner circumferential end portion of the first release lever 21, which is arranged at a position displaced in a circumferential direction relative to the second release lever 25 (see Fig. 2). The first release lever 21 receives at least a component of the pressing force acting on the radially outer circumferential portion thereof from the assist spring 24 in response to an inclination of the assist spring 24. Accordingly, when the first release lever 21 pivots towards the disc spring 23 about the first fulcrum portion 21b as the fulcrum from a state where the first release lever 21 (a line (a surface) connecting the variable force input portion 21a and the fulcrum portion 21b) corresponds to (becomes in parallel with) a line (a surface) connecting the support member 22 and a fulcrum portion of the seat portion 24c of the assist spring 24 (i.e. a turnover point), the pressing force generated by the assist spring 24 acts on the first release lever 21 so as to pivot (rotate) the first release lever 21 towards the disc spring 23. On the other hand, in the case where the first release lever 21 pivots (rotates) about the fulcrum portion 21b toward the pressure plate 28 from the state where the first release lever 21 (the line (the surface) connecting the variable force input portion 21a and the fulcrum portion 21b) corresponds to (becomes in parallel with) the line (the surface) connecting the support member 22 and the fulcrum portion of the seat portion 24c of the assist spring 24 (i.e. the turnover point), the pressing force generated by the assist spring 24 acts on the first release lever 21 so as to pivot (rotate) the first release lever 21 towards the pressure plate 28.

The support member 22 supports the first release lever 21 while allowing the first release lever 21 to be pivotable about the fulcrum portion 21b. Furthermore, the support member 22 is supported by the support portion 20a of the clutch cover 20.

The disc spring 23, formed in a substantially coned shape and serving as a biasing member, biases the first release lever 21 so that the first release lever 21 presses the pressure plate 28 toward the flywheel 5 at the force output portion 21c of the first release lever 21. The disc spring 23 is arranged between the clutch cover 20 and first release lever 21. An outer circumferential end portion of the disc spring 23 in a radial direction thereof contacts the protruding portion 20c of the clutch cover 20 and an inner circumferential end portion of the disc spring 23 contacts the protruding portion 21d of the first release lever 21 so as to bias the first release lever 21 towards the pressure plate 28. Biasing the first release lever 21 by means of the disc spring 23 allows the first release lever 21 to pivot (rotate) about the fulcrum point 21b toward the pressure plate 28.

The assist spring 24 is a component of the assist mechanism 8 for assisting the operation load applied to the variable force input portion 21a of the first release lever 21 so as to resist against a biasing force of the disc spring 23. The assist spring 24 is arranged at a position being displaced from the second release lever 25 in the circumferential direction thereof. The assist spring 24 is provided between the inner circumferential end portion of the first release lever 21 and the fulcrum of an inner circumferential portion of the assist spring 24 (i.e. the fulcrum of the seat portion 24c) so as to be extendable. The assist spring 24 applies a rotational force to the inner circumferential end portion of the first release lever 21 in response to the inclination of the assist spring 24, so that the first release lever 21 generates a biasing force at the outer end circumferential portion thereof relative to the disc spring 23. The assist spring 24 includes a seat portion 24b, the seat portion 24c and a spring 24a (for example, a coil spring or an elastic member) that is arranged between the seat portions 24b and 24c. The seat portion 24b pivotally supports the inner circumferential end portion of the first release lever 21. On the other hand, the seat portion 24c is pivotally supported by the support portion 20b of the clutch cover 20. In the case where the variable force output portion 25c of the second release lever 25 presses the variable force input portion 21 a of the first release lever 21 and the first release lever 21 pivots (rotates) about the first fulcrum portion 21b toward the disc spring 23 from the state where the first release lever 21 (i.e. the line (the surface) connecting the variable force input portion 21a and the fulcrum portion 21b) corresponds to (becomes in parallel with) the line (the surface) connecting the support member 22 and the fulcrum of the seat portion 24c of the assist spring 24 (i.e. when the first release lever 21 reaches the turnover point), the assist spring 24 assists the first release lever 21 so as to pivot (rotate) toward the disc spring 23.

The second release lever 25 is pivotally supported by the clutch cover 20. The second release lever 25 is arranged at a position being displaced from the assist spring 24 in the circumferential direction thereof. The second release lever 25 includes a force input portion 25a at an inner circumferential portion thereof. A pressing force generated by the release bearing 7 is applied to a surface of the second release lever 25 facing the release bearing 7 at the force input portion 25a. The second release lever 25 further includes the fulcrum portion 25b, which is pivotally supported by the fulcrum member 26, at an intermediate portion of the second release lever 25 in the radial direction thereof. Furthermore, the second release lever 25 includes the variable force output portion 25c at the outer circumferential portion thereof. Accordingly, the second release lever 25 presses the variable force input portion 21a of the first release lever 21 at the variable force output portion 25c. The variable force output portion 25c is formed in a shape by which a contact portion between the first release lever 21 and the second release lever 25 is displaced in the radially outer direction as the outer circumferential portion of the second release lever 25 inclines towards the first release lever 21. For example, the variable force output portion 25c is formed in a half-ellipse shape when being viewed in a vertical direction relative to a surface of Fig. 1. In other words, the variable force output portion 25c is formed so as to protrude towards the first release lever 21 and so as to have a curved surface. Furthermore, the variable force output portion 25c is displaced together with the variable force input portion 21a of the first release lever 21 contacting the curved surface of the variable force output portion 25c in response to the inclination of the second release lever 25. The second release lever 25 is a component of the variable lever ratio mechanism 4. The pressing point of the variable force output portion 25c relative to the variable force input portion 21a of the first release lever 21 is displaced in the radially outer direction in response to the inclination of the outer circumferential portion of the second release lever 25 towards the first release lever 21. On the other hand, the force input portion 25a and the fulcrum portion 25b are not (are considered not to be) displaced in the radial direction. Accordingly, the lever ratio is changeable. The second release lever 25 pivots about the fulcrum portion 25b when the second release lever 25 is pressed towards the input shaft 2 at the force input portion 25a by the release bearing 7. Accordingly, the variable force output portion 25c presses the variable force input portion 21a of the first release lever 21.

The fulcrum member 26 pivotally supports the second release lever 25 about the fulcrum portion 25b as the fulcrum. Furthermore, the fulcrum member 26 is supported by the support portion 20b of the clutch cover 20.

The pressure plate 28 is configured so as to press the clutch disc 10 toward the flywheel 5 so as to sandwich the clutch disc 10 between the pressure plate 28 and the flywheel 5, thereby frictionally engaging the clutch disc 10 with the flywheel 5 so that the clutch disc 10 is rotated integrally with the flywheel 5. The pressure plate 28 is arranged to face the flywheel 5 via the clutch disc 10. The pressure plate 28 is connected to the clutch cover 20 by means of straps, so that the pressure plate 28 is rotated in response to a rotation of the clutch cover 20. The pressure plate 28 includes the protruding portion 28a for establishing a contact with the force output portion 21c of the first release lever 21. The pressure plate 28 press-contacts (or, slidably contacts, in a case where the pressing force is low) with the first friction member 11 of the clutch disc 10 while the pressure plate 28 is pressed towards the flywheel 5 by the first release lever 21. Furthermore, the pressure plate 28 is configured so as not to contact the second release lever 25.

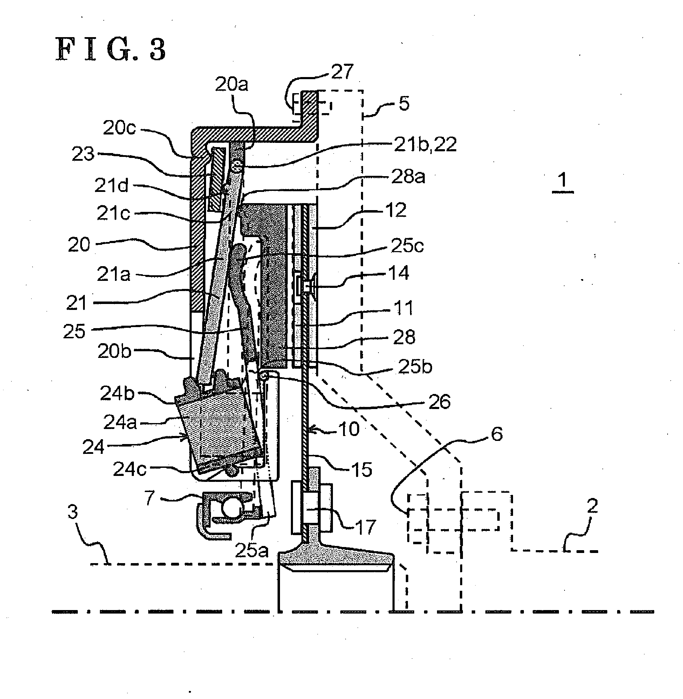

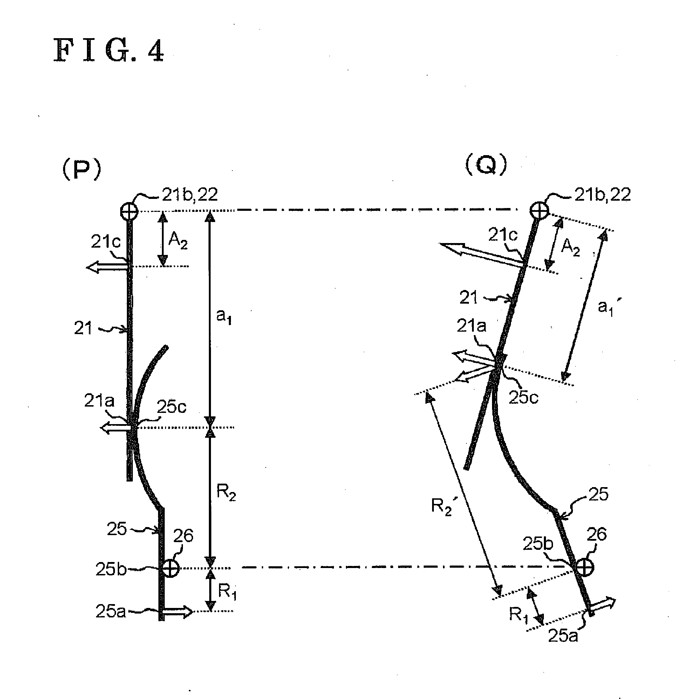

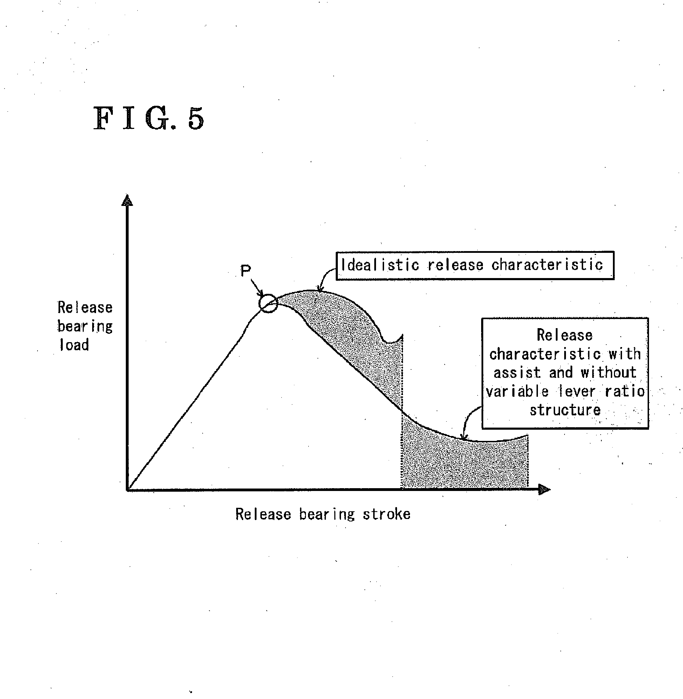

An operation of the clutch apparatus 1 according to the first embodiment will be described below with reference to the drawings. Illustrated in Fig. 3 is a diagram for explaining the operation of the clutch apparatus 1 according to the first embodiment. Illustrated in Fig. 4 is a schematic diagram for explaining changes in the lever ratios of the first release lever 21 and the second release lever 25 of the clutch apparatus 1 according to the first embodiment. A state of the clutch apparatus 1 indicated by (P) illustrates an engaged state of the clutch apparatus 1. On the other hand, a state of the clutch apparatus 1 indicated by (Q) illustrates a disengaged state of the clutch apparatus 1. Illustrated in Fig. 5 is a graph showing a characteristic of the load applied to the release bearing 7 of the clutch apparatus 1 according to the first embodiment. Additionally, illustrated in Fig. 3 is the clutch apparatus 1 in the disengaged state (indicated by a broken line is the clutch apparatus 1 in the engaged stated).

As illustrated in Fig. 1, the pressure plate 28 press-contacts the disc clutch 10 while the clutch apparatus 1 is in the engaged state (i.e. while the operation portion such as the clutch lever, the clutch pedal and the like is not operated), so that the rotational force of the engine is transmitted from the input shaft 2 to the output shaft 3. The pressing force for press-contacting the pressure plate 28 and the disc clutch 10 is generated by the disc spring 23 and the assist spring 24. The pressing force generated by the disc spring 23 is transmitted to the pressure plate 28 via the first release lever 21. The load, which is generated by the assist spring 24 and which includes a component of force in the rotational direction of the first release lever 21 about the fulcrum portion 21b, is amplified by the lever ratio of the first release lever 21, and the amplified load is transmitted to the pressure plate 28.

As illustrated in Fig. 3, when the operation portion such as the clutch lever, the clutch pedal and the like is operated (i.e. when the manual operation of the clutch lever, the depressing operation of the clutch pedal and the like is performed) while the clutch apparatus 1 is in the engaged state, the release bearing 7 is displaced towards the right in Fig. 3 via the mechanism such as the hydraulic pressure mechanism, the link mechanism and the like. Then, the force input portion 25a of the second release lever 25 is pressed towards the input shaft 2 by the release bearing 7. Accordingly, the second release lever 25 pivots about the fulcrum portion 25b so that the variable force output portion 25c of the second release lever 25 presses the variable force input portion 21a of the first release lever 21 towards the disc spring 23 based on the principle of the lever. In a process of the variable force output portion 25c of the second release lever 25 pressing the variable force input portion 21a of the first release lever 21, a pressing point of the variable force output portion 25c relative to the variable force input portion 21a of the first release lever 21 is displaced in the radially outer direction as the outer circumferential portion of the second release lever 25 inclines towards the first release lever 21. However, the force input portion 25a and the fulcrum portion 25 are not (are not considered to be) displaced in the radial direction. Accordingly, the lever ratio of the second release lever 25 changes. Simultaneously, the pressing point of the variable force input portion 25c of the second release lever 25 relative to the variable force input portion 21a is displaced in the radially outer direction as the outer circumferential portion of the second release lever 25 inclines towards the first release lever 21, so that the variable force input portion 21a is displaced in the radially outer direction. However, the fulcrum portion 21b and the force output portion 21c are not (are not considered to be) displaced in the radial direction. Accordingly, the lever ratio of the first release lever 21 changes. In a case where the variable force input portion 21a of the first release lever 21 is pressed towards the disc spring 23 so as to exceed the biasing force generated by the disc spring 23, the first release lever 21 pivots about the fulcrum portion 21b towards the disc spring 23 and simultaneously, the disc spring 23 compresses, so that the biasing of the protruding portion 28a of the pressure plate 28 to the first release lever 21 at the force output portion 21c is release based on the principle of the lever. Accordingly, the pressure plate 28 is displaced towards the left in Fig. 3 and the press contact between the pressure plate 28 and the clutch disc 10 is cancelled, so that the transmission of the rotational force from the input shaft 2 to the output shaft 3 is interrupted. In other words, the clutch apparatus 1 is turned to be in the disengaged state. Additionally, in the case where the variable force output portion 25c of the second release lever 25 presses the variable force input portion 21a of the first release lever 21, the pressing force of the assist spring 24 acts as a reaction force against the pressing force generated by the variable force output portion 25c of the second release lever 25 until the first release lever 21 (i.e. the line (the surface) connecting the variable force input portion 21a and the fulcrum portion 21b) corresponds to (becomes in parallel with) the line (the surface) connecting the support member 22 and the fulcrum of the seat portion 24c of the assist spring 24 (i.e. the turnover point). Once the first release lever 21 exceeds the turnover point, the pressing force of the assist spring 24 turns to act as an assisting force relative to the pressing force of the variable force output portion 25c of the second release lever 25.

The changes in the lever ratios of the first release lever 21 and the second release lever 25 will be described below with reference to the drawings.

In the case where the clutch apparatus 1 is in the engaged state (see the drawing (P) in Fig. 4), the lever ratio $R_{a1}$ of the first release lever 21, the lever ratio $R_{L1}$ of the second release lever 25 and a cover ratio $R_{c1}$ of the clutch cover 20 are calculated as follows:

$$R_{a1} = \frac{a_1}{A_2}$$

$$R_{L1} = \frac{R_1}{R_2}$$

$$R_{c1} = R_{a1} \times R_{L1}$$

where "$a_1$" indicates a distance between the variable force input portion 21a and the fulcrum portion 21b of the first release lever 21, "$A_2$" indicates a distance between the fulcrum portion 21b and the force output portion 21c of the first release lever 21, "$R_1$" indicates a distance between the force input portion 25a and the fulcrum portion 25b of the second release lever 25, and "$R_2$" indicates a distance between the fulcrum portion 25b and the variable force output portion 25c of the second release lever 25.

On the other hand, in the case where the clutch apparatus 1 is in the disengaged state (see the drawing (Q) in Fig. 4), the lever ratio $R_{a2}$ of the first release lever 21, the lever ratio $R_{L2}$ of the second release lever 25 and the cover ratio $R_2$ of the clutch cover 20 are calculated as follows:

$$R_{a2} = \frac{a_1{'}}{A_2{'}}$$

$$R_{L2} = \frac{R_1}{R_2{'}}$$

$$R_{c2} = R_{a2} \times R_{L2}$$

where "$a_1{'''}$" indicates the distance between the variable force input portion 21a and the fulcrum portion 21b of the first release lever 21, "$A_2$" indicates the distance between the fulcrum portion 21b and the force output portion 21c of the first release lever 21, "$R_1$" indicates the distance between the force input portion 25a and the fulcrum portion 25b of the second release lever 25, and "$R_2{'''}$" indicates the distance between the fulcrum portion 25b and the variable force output portion 25c of the second release lever 25.

Additionally, the distance "$a_1$" is set so as to be greater than the distance "$a_1{'''}$" (I.e. $a_1 > a_1{'}$) and the distance "$R_2$" is set to be shorter than the distance "$R_2{'''}$" (i.e. $R_2 < R_2{'}$). Therefore, the cover ratio $R_{c1}$ in the case where the clutch apparatus 1 is in the engaged state becomes greater than the cover ratio $R_2$ in the case where the clutch apparatus 1 is in the disengaged state (i.e. $R_{c1} > R_{c2}$), so that the lever ratios of the first release lever 21 and the second release lever 25 continuously decreases as the clutch apparatus 1 turns into the disengaged state from the engaged state.

The characteristic of the load applied to the release bearing 7 in the case where the first release lever 21 pivots towards the disc spring 23 so as to exceed the turnover point is indicated by "an idealistic release characteristic" in Fig. 5. Additionally, as a comparison example, the characteristic of the load applied to the release bearing 7 in a case where the assisting force of the assist spring acts on the clutch apparatus having the configuration illustrated in Fig. 1 but the lever ratio is not variable is indicated by "a release characteristic with assist and without variable lever ratio structure" in Fig. 5. A purpose of the clutch apparatus 1 according to the first embodiment is to achieve the idealistic load-stroke characteristic of the release bearing 7, i.e. the idealistic release characteristic, which is determined on the basis of an idealistic load-stroke characteristic of the operation mechanism (e.g. the clutch pedal). A load increasing ratio decreases in accordance with the principle of the lever when the lever ratio is continuously decreased from a point of time when a difference is about to occur between the release characteristic of the clutch apparatus 1 having no variable lever ratio structure and the idealistic release characteristic (i.e. a point P in Fig. 5). Accordingly, the load applied to the release bearing 7 (i.e. a release bearing load) increases, on the other hand, a release bearing stroke decreases. Hence, the release characteristic may be changed to the characteristic indicated by positive slopes from the characteristic indicated by negative slopes. As a result, the idealistic release characteristic may be achieved.

When the operation inputted to the operation portion such as the clutch lever, the clutch pedal and the like (i.e. the manual operation to the clutch lever, the depressing operation to the clutch pedal and the like) is cancelled while the clutch apparatus 1 is in the disengaged state, the first release lever 21 pivots about the fulcrum portion 21b towards the pressure plate 28 by the biasing force generated by the disc spring 23, so that first release lever 21 presses the protruding portion 28a of the pressure plate 28 at the force output portion 21c. Accordingly, the first release lever 21 presses the variable force output portion 25c of the second release lever 25 towards the pressure plate 28 while the variable force input portion 21 a of the first release lever 21 is displaced in a radially inner direction, so that the clutch apparatus 1 is turned to be in the engaged state via a partially engaged state thereof. Additionally, in the case where the first release lever 21 presses the variable force output portion 25c of the second release lever 25 at the variable force input portion 21 a, the pressing force of the assist spring 24 acts as the reaction force against the pressing force of the variable force input portion 21a of the first release lever 21 until the first release lever 21 reaches the turnover point. Once the first release lever 21 exceeds the turnover point, the pressing force of the assist spring 24 turns to act as the assisting force relative to the pressing force of the variable force input portion 21 a of the first release lever 21. When the second release lever 25 is pressed towards the pressure plate 28 while the variable force output portion 25c of the second release lever 25 is displaced in the radially inner direction, the second release lever 25 pivots about the fulcrum portion 25b, so that the force input portion 25a of the second release lever 25 displaces the release bearing 7 to the left in Fig. 3.

According to the first embodiment, because the lever ratio of each of the first and second release levers 21 and 25 relative to the clutch cover 20 is set to be variable so that the load-stroke characteristic of the release bearing 7 has more flexibility, the idealistic load-stroke characteristic of the operation mechanism (e.g. the clutch pedal) may be achieved. Furthermore, according to the first embodiment, the assist mechanism 8 (i.e. the mechanism that links to the assist spring 24) for assisting the operation force is provided within the clutch cover 20, which is arranged at an upper most stream of a clutch operation pathway, so that the load generated in a downstream of the clutch operation pathway relative to the clutch cover 20 may be reduced. Accordingly, a load efficiency of the clutch apparatus 1 according to the first embodiment may be increased when comparing to a known clutch apparatus. Furthermore, because the load generated in the downstream of the clutch operation pathway relative to the clutch cover 20 is reduced, a load resistance of components arranged on the downstream of the clutch operation pathway may be reduced. Accordingly, manufacturing costs of the clutch apparatus 1 according to the first embodiment may be reduced and a design freedom of the clutch apparatus 1 may be increased. Still further, because some functions are integrated within the clutch cover 20, a size of the clutch apparatus 1 according to the first embodiment may be reduced.

[Second embodiment]

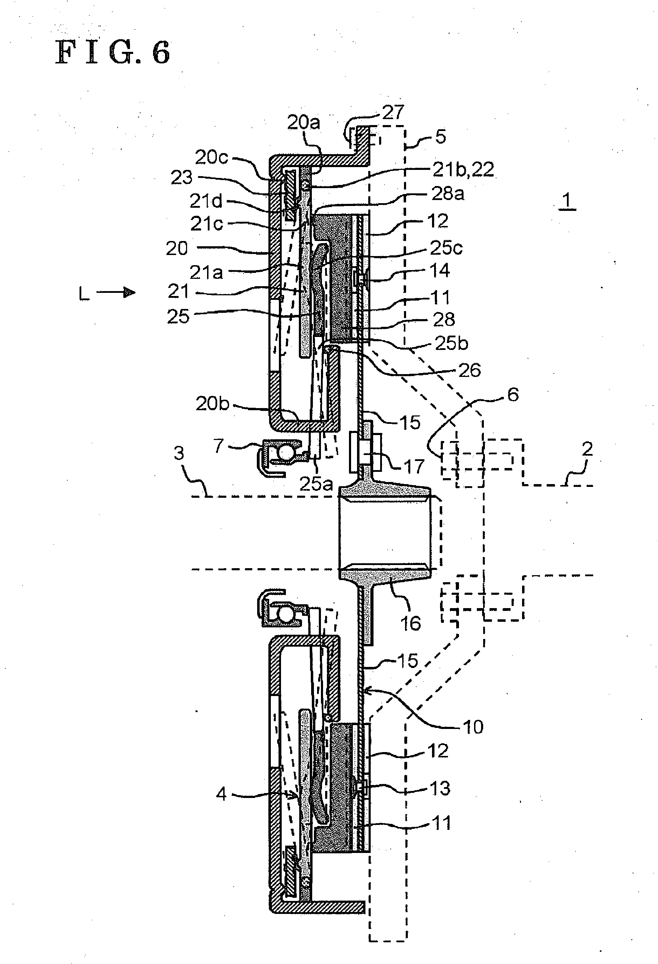

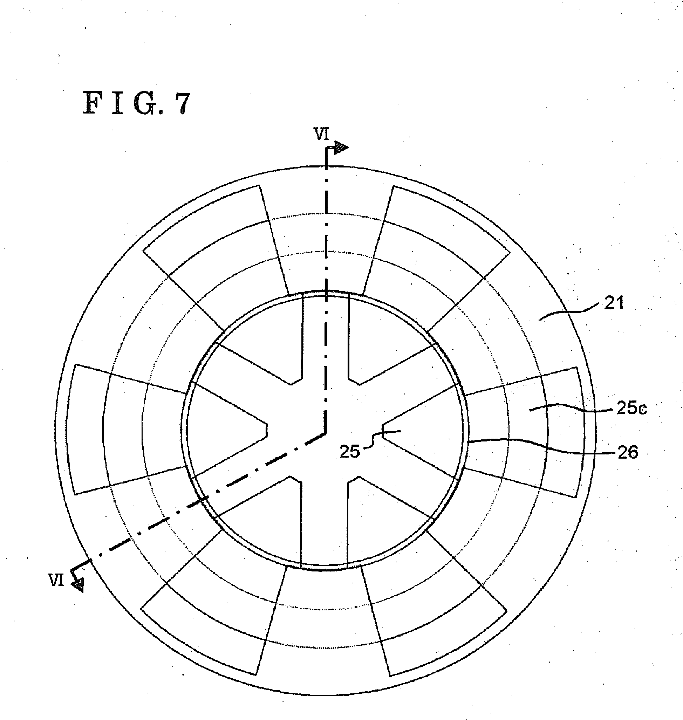

The clutch apparatus 1 according to a second embodiment will be described below with reference to the drawings. Illustrated in Fig. 6 is a schematic cross-sectional diagram of a configuration of the clutch apparatus 1 according to the second embodiment taken along line VI-VI in Fig. 7. Illustrated in Fig. 7 is a schematic plane view of the configuration of the clutch apparatus 1 according to the second embodiment when being viewed in the axial direction (from a direction indicated by an arrow L in Fig. 6). Additionally, illustrated in Fig. 6 is the clutch apparatus 1 in the engaged state (a broken line indicates the disengaged state). Furthermore, the first release lever 21, the second release lever 25 and the fulcrum member 26 of the clutch apparatus 1 are mainly illustrated in Fig. 7.

The clutch apparatus 1 according to the second embodiment differs from the clutch apparatus 1 according to the first embodiment in that the clutch apparatus 1 according to the second embodiment does not include the assist mechanism 8 (the mechanism that links to the assist spring 24). Other configurations and functions of the clutch apparatus 1 according to the second embodiment are similar to the clutch apparatus 1 according to the first embodiment. As is the case with the first embodiment, according to the second embodiment, because the lever ratio of each of the first and second release levers 21 and 25 relative to the clutch cover 20 is set to be variable and the load-stroke characteristic of the release bearing 7 has more flexibility, the idealistic load-stroke characteristic of the operation mechanism (e.g. the clutch pedal and the like) may be achieved.

[Third embodiment]

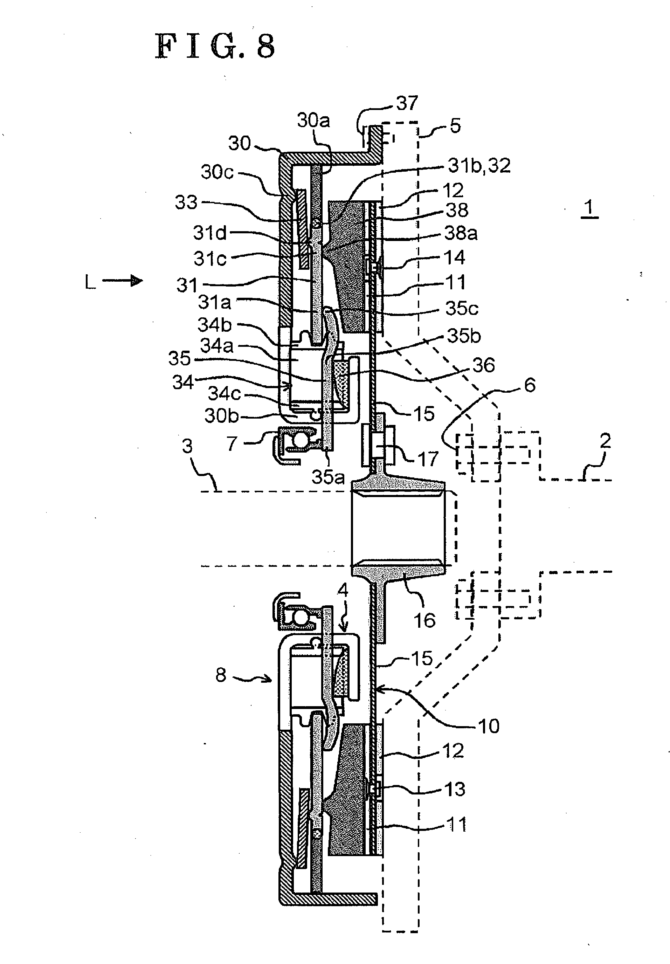

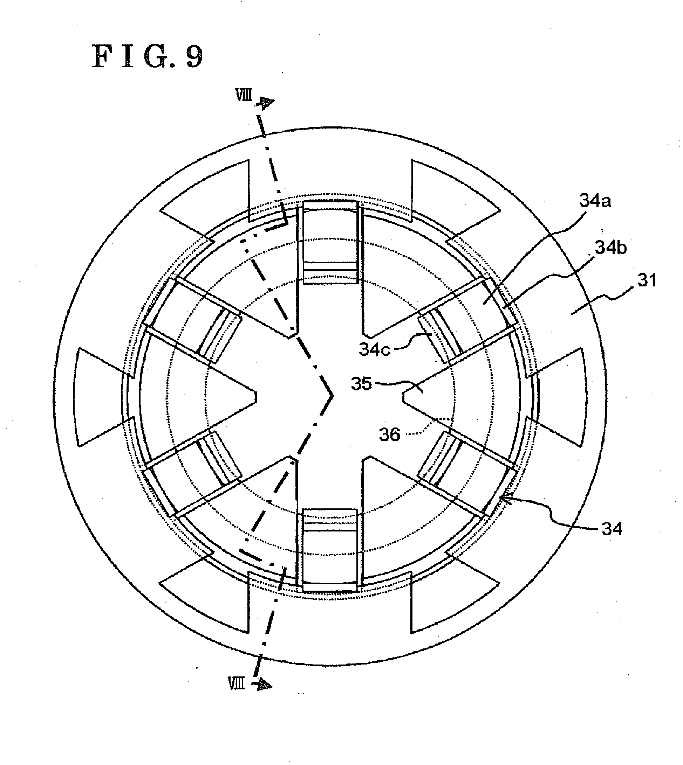

The clutch apparatus 1 according to a third embodiment will be described below with reference to the drawings. Illustrated in Fig. 8 is a schematic cross-sectional diagram of a structure of the clutch apparatus 1 according to the third embodiment taken along line VIII-VIII in Fig. 9. Illustrated in Fig. 9 is a schematic plane view of the structure of the clutch apparatus 1 according to the third embodiment when being viewed in the axial direction (i.e. from a direction indicated by an arrow L in Fig. 8). Additionally, illustrated in Fig. 8 is the clutch apparatus 1 in the engaged state. Furthermore, a first release lever 31, an assist spring 34, a second release lever 35 and a variable fulcrum member 36 of the clutch apparatus 1 are mainly illustrated in Fig. 9.

According to the first embodiment (see Fig. 1), the lever ratios of the first release lever 21 and the second release lever 25 are both set to be variable. On the other hand, in the third embodiment, only the second release lever 35 is configured so that a lever ratio thereof is variable. The second release lever 35 is configured so that a variable fulcrum portion 25b thereof is displaced in a radial direction of the second release lever 35 in response to a pivotal movement of the second release lever 35 and so that a force input portion 35a and a force output portion 35c of the second release lever 35 are not displaced in the radial direction even if the second release lever 35 pivots.

The clutch apparatus 1 according to the third embodiment is an apparatus that establishes and interrupts the connection between the input shaft 2 (e.g. the crankshaft of the engine) and the output shaft 3 (e.g. the input shaft of the transmission apparatus). Furthermore, the clutch apparatus 1 includes the variable lever ratio mechanism 4 and the assist mechanism 8 (i.e. the mechanism that links to the assist spring 34) within a clutch cover 30, which is configured so as to rotate together with the input shaft 2 as a unit. The variable lever ratio mechanism 4 includes the first and second release levers 31 and 35, whose lever ratio is set to be variable. The assist mechanism 8 for assisting the operation load is provided within the clutch cover 30. The clutch apparatus 1 is arranged on the power transmission pathway between the input shaft 2 and the output shaft 3, which are arranged in the coaxial manner. Furthermore, as illustrated in Fig. 8, the clutch apparatus 1 includes the flywheel 5, the release bearing 7, the clutch disc 10, the clutch cover 30, the first release lever 31, a support member 32, the assist spring 34, the second release lever 35, the variable fulcrum member 36 and a pressure plate 38 as major components. Additionally, the configurations and functions of the flywheel 5, the release bearing 7 and the clutch disc 10 are similar to the flywheel 5, the release bearing 7 and the clutch disc 10 of the clutch apparatus 1 according to the first embodiment.

The clutch cover 30, which is formed in an annular shape, pivotally supports the first release lever 31 and the second release lever 35. The clutch cover 30 is fixed on the flywheel 5 at an outer circumferential portion of the clutch cover 30 by means of bolts 37, so that the clutch cover 30 rotates together with the flywheel 5 as a unit. Furthermore, the clutch cover 30 is formed so that an inner circumferential portion thereof is spaced away from the flywheel 5 in the axial direction when being attached to the flywheel 5. The clutch cover 30 includes a support portion 30a, which extends in a radially inner direction from the outer circumferential portion thereof extending in the axial direction and which pivotally retains a fulcrum portion 31b of the first release lever 31. Furthermore, the clutch cover 30 includes a support portion 30b for supporting the variable fulcrum member 36, which serves as a fulcrum of a variable fulcrum portion 35b of the second release lever 35, at the inner circumferential portion. The support portion 30b pivotally supports a seat portion 34c of the assist spring 34. Still further, the clutch cover 30 includes a protruding portion 30c for supporting one end portion of a disc spring 33. The clutch cover 30 is formed so as not to contact the first release lever 31, the second release lever 35 and the assist spring 34 when the second release lever 35 and the assist spring 34 pivot.

The first release lever 31 is pivotally supported by the clutch cover 30. The first release lever 31 is provided between the pressure plate 38 and the disc spring 33. Furthermore, the first release lever 31 includes a force input portion 31a, at which a pressing force of the force output portion 35c of the second release lever 35 is received, at a surface of an inner circumferential portion of the first release lever 31 facing the pressure plate 38. The first release lever 31 includes the fulcrum portion 31b, which is pivotally retained by the support member 32, at an outer circumferential end portion. The first release lever 31 includes a force output portion 31 c, at which the first release lever 31 contacts the protruding portion 38a of the pressure plate 38, at the surface of an intermediate portion of the first release lever 31 facing the pressure plate 38. Furthermore, the first release lever 31 includes a protruding portion 31d at an intermediate portion of a surface of the first release lever 31 facing opposite to the pressure plate 38 (i.e. a surface facing the clutch cover 20 in the axial direction). The disc spring 33 biases first release lever 31 at the protruding portion 31d towards the pressure plate 38. The first release lever 31 is configured so that the inner circumferential portion thereof pivots about the fulcrum portion 31b towards the pressure plate 38 by receiving a biasing force of the disc spring 33. Accordingly, the first release lever 31 biases the protruding portion 38a of the pressure plate 38 at the force output portion 3 1 c. When the force input portion 31a of the first release lever 31 is pressed by the force output portion 35c of the second release lever 35, the inner circumferential portion of the first release lever 31 pivots about the fulcrum portion 31b in a direction away from the pressure plate 38. Simultaneously, the disc spring 33 compresses and the biasing force of the protruding portion 38a of the pressure plate 38 applied to the force output portion 31c is cancelled.

The first release lever 31, formed in a substantially annular shape, is pivotally supported by the seat portion 34b of the assist spring 34 at an inner circumferential end portion of the first release lever 31, which is arranged at a position displaced in the radial direction relative to the second release lever 35. The first release lever 31 receives at least a component of the pressing force acting on the outer circumferential portion thereof from the assist spring 34 in response to an inclination of the assist spring 34. Accordingly, when the first release lever 31 pivots about the fulcrum portion 31b towards the disc spring 33 from a state where the first release lever 31 (a line (a surface) connecting the force input portion 31a and the fulcrum portion 31b) corresponds to (becomes in parallel with) a line (a surface) connecting the support member 32 and a fulcrum portion of the seat portion 34c of the assist spring 34 (i.e. a turnover point), the pressing force generated by the assist spring 34 acts on the first release lever 31 so as to pivot (rotate) the first release lever 31 towards the disc spring 33. On the other hand, in a case where the first release lever 31 pivots (rotate) about the fulcrum portion 31b toward the pressure plate 38 from the state where the first release lever 31 (the line (the surface) connecting the force input portion 31a and the fulcrum portion 31b) corresponds to (becomes in parallel with) the line (the surface) connecting the support member 32 and the fulcrum portion of the seat portion 34c of the assist spring 34 (i.e. the turnover point), the pressing force generated by the assist spring 34 acts on the first release lever 31 so as to pivot (rotate) the first release lever 31 towards the pressure plate 38.

The support member 32 retains the first release lever 31 while allowing the first release lever 31 to pivot about the fulcrum portion 31b. Furthermore, the support member 32 is supported by the support portion 30a of the clutch cover 30.

The disc spring 33, formed in a substantially coned shape and serving as a biasing member, biases the first release lever 31 so that the first release lever 31 presses the pressure plate 38 toward the flywheel 5 at the force output portion 31c. The disc spring 33 is arranged between the clutch cover 30 and the first release lever 31. An outer circumferential end portion of the disc spring 33 contacts the protruding portion 30c of the clutch cover 30 and an inner circumferential end portion of the disc spring 33 contacts the protruding portion 31d of the first release lever 31, so that the disc spring 33 biases the first release lever 31 towards the pressure plate 38. Biasing the first release lever 31 by means of the disc spring 33 allows the first release lever 31 to pivot (rotate) about the fulcrum portion 31b toward the pressure plate 38.

The assist spring 34 is a component of the assist mechanism 8 for assisting the operation load that is applied to the force input portion 31a of the first release lever 31 so as to resist against the biasing force of the disc spring 33. The assist spring 34 is arranged at a position being displaced from the second release lever 35 in the circumferential direction thereof (see Fig.9). The assist spring 34 is provided between the inner circumferential end portion of the first release lever 31 and the fulcrum of an inner circumferential portion of the assist spring 34 (i.e. the fulcrum of the seat portion 34c) so as to be extendable. The assist spring 34 applies a rotational force to the inner circumferential end portion of the first release lever 31 in response to the inclination of the assist spring 34, so that the first release lever 31 generates a biasing force at the outer end circumferential portion thereof relative to the disc spring 33. The assist spring 34 includes a seat portion 34b, the seat portion 34c and a spring 34a (for example, a coil spring or an elastic member) that is arranged between the seat portions 34b and 34c. The seat portion 34b pivotally supports the inner circumferential end portion of the first release lever 31. On the other hand, the seat portion 34c is pivotally supported by support portion 30b of the clutch cover 30. In the case where the second release lever 35 presses the force input portion 31a of the first release lever 31 at the force output portion 35c and the first release lever 31 pivots (rotates) about the first fulcrum portion 31b toward the disc spring 33 from the state where the first release lever 31 (i.e. the line (the surface) connecting the force input portion 31 a and the fulcrum portion 31b) corresponds to (becomes in parallel with) the line (the surface) connecting the support member 32 and the fulcrum of the seat portion 34c of the assist spring 34 (i.e. from the turnover point), the assist spring 34 assists the first release lever 31 so that the first release lever 31 pivots (rotates) toward the disc spring 33.

The second release lever 35 is pivotally supported by the clutch cover 30 via the variable fulcrum member 36. The second release lever 35 is arranged at a position displaced in the radial direction relative to the assist spring 34. The second release lever 35 includes the force input portion 35a, to which the pressing force of the release bearing 7 is applied, at a surface of an inner circumferential portion of the second release lever 35 facing the release bearing 7. Furthermore, the second release lever 35 includes the variable fulcrum portion 35b, which is pivotally supported by the variable fulcrum member 36 while allowing a fulcrum position of the variable fulcrum portion 35b to be displaced, at an intermediate portion of the second release lever 35. The variable fulcrum portion 35b is set so that a contact position thereof relative to the variable fulcrum member 36 is displaced in the radially inner direction as an outer circumferential portion of the second release lever 35 inclines towards the first release lever 31. The second release lever 35 further includes the force output portion 35c, at which the second release lever 35 presses the force input portion 31a of the first release lever 31, at the outer circumferential portion of the second release lever 35. The second release lever 35 is a component of the variable lever ratio mechanism 4. The position of the variable fulcrum portion 35b is displaced in the radially inner direction as the outer circumferential portion of the second release lever 35 inclines towards the first release lever 31. On the other hand, the force input portion 35a and the force output portion 35c are not (are considered not to be) displaced in the radial direction. Accordingly, the lever ratio is changed. The second release lever 35 is configured so as to pivot about the variable fulcrum portion 35b when the force input portion 35a of the second release lever 35 is pressed towards the input shaft 2 by the release bearing 7, so that the second release lever 35 presses the force input portion 31a of the first release lever 31 at the force output portion 35c.

The variable fulcrum member 36 supports the second release lever 35 while allowing the second release lever 35 to pivot about the variable fulcrum portion 35b as a fulcrum. The variable fulcrum member 36 is retained by the support portion 30b of the clutch cover 30. Furthermore, the variable fulcrum member 36 is formed in a shape so that the contact position thereof relative to the variable fulcrum portion 35b changes in the radially inner direction as the outer circumferential portion of the second release lever 35 inclines towards the first release lever 31 (e.g.. in this embodiment, the variable fulcrum member 36 is formed in a quarter-ellipse shape when being viewed in a vertical direction relative to a paper surface of Fig. 8). In other words, the variable fulcrum member 36 includes a curved surface so as to protrude towards the second release lever 35, so that the variable fulcrum member 36 displaces the variable fulcrum portion 35b of the second release lever 35, which contacts the curved surface, in response to an inclination of the second release lever 35.

The pressure plate 38 is configured so as to press the clutch disc 10 toward the flywheel 5 and sandwich the clutch disc 10 between the pressure plate 38 and the flywheel 5, thereby frictionally engaging the clutch disc 10 with the flywheel 5, so that the clutch disc 10 is rotated integrally with the flywheel 5. The pressure plate 38 is arranged to face the flywheel 5 via the clutch disc 10. Furthermore, the pressure plate 38 is connected to the clutch cover 30 by means of straps, so that the pressure plate 38 is rotated in response to a rotation of the clutch cover 30. The pressure plate 38 includes the protruding portion 38a for establishing a contact with the force output portion 31 c of the first release lever 31. The pressure plate 38 press-contacts (or, slidably contacts, in a case where the pressing force is low) with the first friction member 11 of the clutch disc 10 while the pressure plate 38 is pressed towards the flywheel 5 by the first release lever 31.

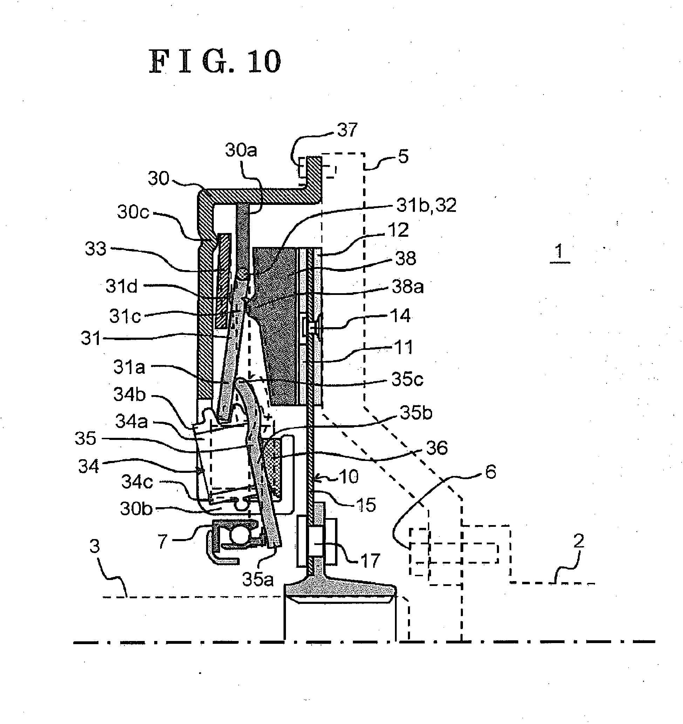

An operation of the clutch apparatus 1 according to the third embodiment will be described below with reference to the drawings. Illustrated in Fig. 10 is a diagram for explaining the operation of the clutch apparatus 1 according to the third embodiment. Additionally, illustrated in Fig. 10 is a disengaged state of the clutch apparatus 1 (the engaged state of the clutch apparatus 1 is indicated by a broken line).

As illustrated in Fig. 8, the pressure plate 38 press-contacts the disc clutch 10 while the clutch apparatus 1 is in the engaged state (i.e. while the operation portion such as the clutch lever, the clutch pedal and the like is not operated), so that the rotational force of the engine is transmitted from the input shaft 2 to the output shaft 3. The pressing force is generated by the disc spring 33 and the assist spring 34. A load generated by the disc spring 33 is transmitted to the pressure plate 38 via the first release lever 31. A load, which is generated by the assist spring 34 and which includes a component of force in the rotational direction of the first release lever 31 about the fulcrum portion 31b, is amplified by the lever ratio of the first release lever 31, and the amplified load is transmitted to the pressure plate 38.

As illustrated in Fig. 10, when the operation portion such as the clutch lever, the clutch pedal and the like are operated (i.e. the manual operation of the clutch lever, the depression operation of the clutch pedal and the like are performed) while the clutch apparatus 1 is in the engaged state, the release bearing 7 is displaced to the right in Fig. 10 via the mechanism such as the hydraulic pressure mechanism, the link mechanism and the like, so that the force input portion 35a of the second release lever 35 is pressed towards the input shaft 2 by the release bearing 7. Accordingly, the second release lever 35 pivots about the variable fulcrum portion 35b and the force output portion 35c of the second release lever 35 presses the force input portion 31a of the first release lever 31 towards the disc spring 33 based on the principle of the lever. In the process of the pivotal operation of the second release lever 35, the contact position between the variable fulcrum portion 35b and the variable fulcrum member 36 is displaced in the radially inner direction as the outer circumferential portion of the second release lever 35 inclines towards the first release lever 31. On the other hand, the force input portion 35a and the force output portion 35c are not (are considered not to be) displaced in the radial direction. Accordingly, the lever ratio of the second release lever 35 changes, more specifically, the lever ratio of the second release lever 35 becomes smaller. In a case where the force input portion 31a of the first release lever 31 is pressed towards the disc spring 33 so as to exceed the biasing force generated by the disc spring 33, the first release lever 31 pivots about the fulcrum portion 31b towards the disc spring 33, simultaneously, the disc spring 33 is compressed, so that biasing operation of the protruding portion 38a of the pressure plate 38 relative to the force output portion 31c of the first release lever 31 is cancelled based on the principle of the lever. Accordingly, the pressure plate 38 moves to the left in Fig. 10 and the press-contact between the pressure plate 38 and the clutch disc 10 is cancelled, thereby interrupting the transmission of the rotational force between the input shaft 2 and the output shaft 3. As a result, the clutch disc 1 turns to be in the disengaged state. Additionally, in the case where the force output portion 35c of the second release lever 35 presses the force input portion 31a of the first release lever 31, the pressing force of the assist spring 34 acts as a reaction force against the pressing force of the force output portion 35c of the second release lever 35 until the first release lever 31 (i.e. the line (the surface) connecting the force input portion 31 a and the fulcrum portion 31b) corresponds to (becomes in parallel with) the line (the surface) connecting the support member 32 and the fulcrum point of the seat portion 34c of the assist spring 34 (i.e. the turnover point). Once the first release lever 31 exceeds the turnover point, the pressing force of the assist spring 34 turns to act as an assisting force relative to the pressing force of the force output portion 35c of the second release lever 35.

When the operation to the operation portion such as the clutch lever, the clutch pedal and the like (i.e. the manual operation of the clutch lever, the depressing operation of the clutch pedal and the like) is cancelled while the clutch apparatus 1 is in the disengaged state, the first release lever 31 pivots about the fulcrum portion 31b towards the pressure plate 38 by the biasing force of the disc spring 33, so that the first release lever 31 presses the protruding portion 38a of the pressure plate 38 at the force output portion 31c and the force output portion 35c of the second release lever 35 at the force input portion 31a towards the pressure plate 38. Accordingly, the clutch apparatus 1 is turned to be in the engaged state via the partially engaged state. Additionally, in the process of the first release lever 31 pressing the force output portion 35c of the second release lever 35 at the force input portion 31a, the pressing force of the assist spring 34 acts as the reaction force against the pressing force of the force input portion 31a of the first release lever 35 until the first release lever 31 reaches the turnover point. Once the first release lever 31 exceeds the turnover point, the pressing force of the assist spring 34 turns to act as the assisting force relative to the pressing force of the force input portion 31 a of the first release lever 31. When the force output portion 35c of the second release lever 35 is pressed towards the pressure plate 38, the second release lever 35 pivots about the variable fulcrum portion 35b, so that the second release lever 35 displaces the release bearing 7 to the left in Fig. 10 at the force input portion 35a. Furthermore, while the second release lever 35 pivots about the variable fulcrum portion 35b, the contact point between the variable fulcrum portion 35b and the variable fulcrum member 36 is displaced in the radially outer direction as the outer circumferential portion of the second release lever 35 inclines towards the flywheel 5. On the other hand, the force input portion 35a and the force output portion 35c are not (are considered not to be) displaced in the radial direction. Accordingly, the lever ratio of the second release lever 35 changes, more specifically, the lever ratio of the second release lever 35 becomes greater.

According to the third embodiment, the clutch apparatus 1 according to the third embodiment has similar advantages and merits as the clutch apparatus according to the first embodiment. When comparing to the clutch apparatus 1 of the first embodiment, the clutch apparatus 1 of the third embodiment is configured so that a distance between the force output portion 35c and the variable fulcrum portion 35b of the second release lever 35 is set to be wider. Accordingly, a variable range of the variable lever ratio may be set to be wider.

[Fourth embodiment]

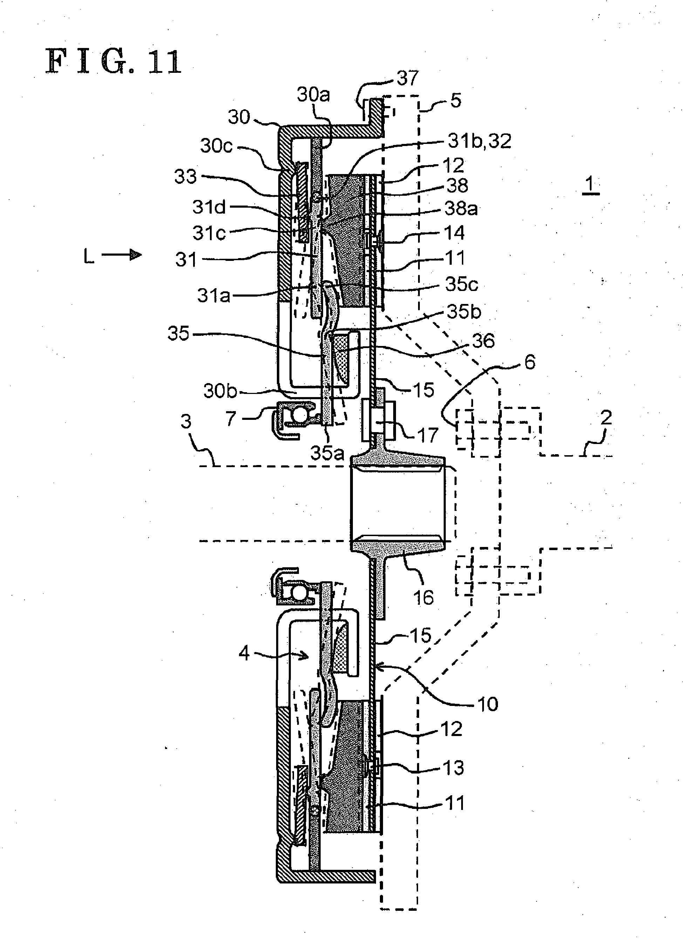

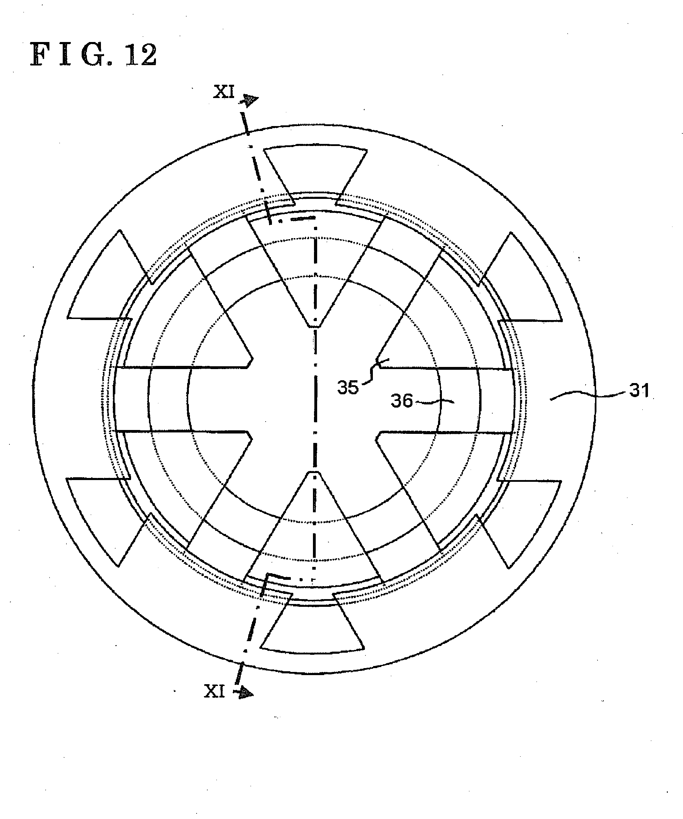

A fourth embodiment of the clutch apparatus 1 will be described below with reference to the drawings. Illustrated in Fig. 11 is a schematic cross-sectional diagram of a configuration of the clutch apparatus 1 according to the fourth embodiment taken along line XI-XI in Fig. 12. Illustrated in Fig. 12 is a schematic plane view of the configuration of the clutch apparatus 1 according to the fourth embodiment when being viewed in the axial direction (i.e. from a direction indicated by an arrow L in Fig. 11). Additionally, illustrated in Fig. 11 is the clutch apparatus 1 in the engaged state. Furthermore, the first release lever 31, the second release lever 35 and the variable fulcrum member 36 of the clutch apparatus 1 are mainly illustrated in Fig. 12.

The clutch apparatus 1 according to the fourth embodiment differs from the clutch apparatus 1 according to the third embodiment in that the clutch apparatus 1 according to the fourth embodiment does not include the assist mechanism 8 (the mechanism that links to the assist spring 34, see Fig. 8). Other configurations and operations of the clutch apparatus 1 according to the fourth embodiment are similar to the clutch apparatus 1 according to the third embodiment. According to the clutch apparatus 1 of the fourth embodiment, as is the case with the first embodiment, the lever ratio of each of the first and second release levers 31 and 35 relative to the clutch cover 30 is set to be variable and the flexibility of the load-stroke characteristic of the release bearing 7 is increased. As a result, the idealistic load-stroke characteristic of the operation mechanism (e.g. the clutch pedal) may be achieved.

[Fifth embodiment]

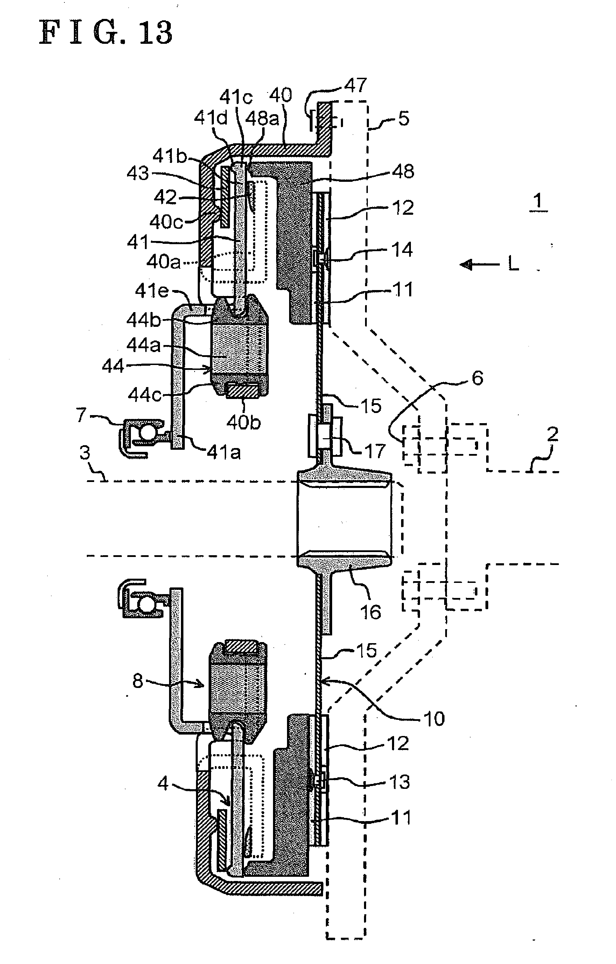

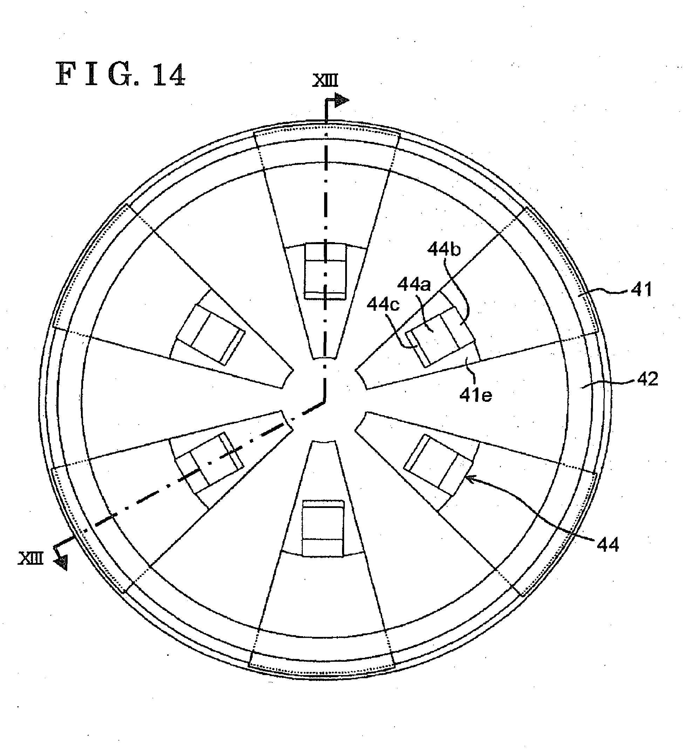

A fifth embodiment of the clutch apparatus 1 will be described blow with reference to the drawings. Illustrated in Fig. 13 is a schematic cross-sectional diagram of a configuration of the clutch apparatus 1 according to the fifth embodiment taken along line XIII-XIII in Fig. 14. Illustrated in Fig. 14 is a schematic plane view of the configuration of the clutch apparatus 1 according to the fifth embodiment when being viewed in the axial direction (i.e. from a direction indicated by an arrow L in Fig. 13). Additionally, illustrated in Fig. 13 is the clutch apparatus 1 in the engaged state. A release lever 41, a variable fulcrum member 42 and an assist spring 44 of the clutch apparatus 1 are mainly illustrated in Fig. 14.

According to the first and third embodiments, the lever ratio of the first release lever (21, 31), which amplifies the load of the assist spring (24, 34) is set to be constant and the assist characteristic is not set to be variable. On the other hand, in the fifth embodiment, a fulcrum of the release lever 41 (i.e. a variable fulcrum portion 41b) is set in a radially inner position relative to a force output portion 41c, so that the fulcrum of the release lever 41 serves as an inner fulcrum. Accordingly, the clutch apparatus 1 according to the fifth embodiment is configured so that a position of the variable fulcrum portion 41 b of the release lever 41 is displaced in the radially inner direction as an outer circumferential portion of the release lever 41 inclines towards a disc spring 43, and so that a distance between a fulcrum portion (i.e. an assisting force input portion) of a seat portion 44b of the assist spring 44 and the variable fulcrum portion 41b and a distance between the variable fulcrum portion 41b and the force output portion 41c are set to be continuously vary, in order to set the lever ratio (which will be defined as an assist lever ratio) of the release lever 41, which amplifies the load of the assist spring 44, to be variable. In the case where the assist lever ratio is set to be variable as in the fifth embodiment, a lever ratio of the release lever 41 relative to a clutch cover 40 (i.e. a ratio of a distance between the variable fulcrum portion 41b and the force output portion 41c relative to a distance between a force input portion 41a and the variable fulcrum portion 41b) also becomes variable.

The clutch apparatus 1 according to the fifth embodiment establishes and interrupts the connection between the output shaft 2 (e.g. the crankshaft of the engine) and the output shaft 3 (e.g. the input shaft of the transmission apparatus). The clutch apparatus 1 according to the fifth embodiment includes the variable lever ratio mechanism 4 and the assist mechanism 8 (the mechanism that links to the assist spring 34) within the clutch cover 40. The variable lever ratio mechanism 4 includes the release lever 41, whose lever ratio is set to be variable. The assist mechanism 8 assists the operation load. Furthermore, the assist mechanism 8 is configured so as to change an amplifying amount of the assisting force in response to changes in the lever ratio of the variable lever ratio mechanism 4. The clutch apparatus 1 is arranged on the power transmission pathway between the input shaft 2 and the output shaft 3, which are arranged in the coaxial manner. The clutch apparatus 1 according to the fifth embodiment includes the flywheel 5, the release bearing 7, the clutch disc 10, the clutch cover 40, the release lever 41, the variable fulcrum member 42, the disc spring 43, the assist spring 44 and a pressure plate 48 as main components of the clutch apparatus 1. Additionally, the clutch apparatus 1 according to the fifth embodiment includes the flywheel 5, the release bearing 7 and the clutch disc 10 similar to the first embodiment.

The clutch cover 40, which is formed in an annular shape, pivotally supports the first release lever 41. The clutch cover 40 is fixed on the flywheel 5 at an outer circumferential portion of the clutch cover 40 by means of bolts 47, so that the clutch cover 40 rotates together with the flywheel 5 as a unit. Furthermore, the clutch cover 40 is formed so that an inner circumferential portion thereof is spaced away from the flywheel 5 when being attached to the flywheel 5. The clutch cover 40 includes a support portion 40a, which supports the variable fulcrum member 42 serving as a fulcrum of the variable fulcrum portion 41b of the release lever 41, at an intermediate portion of the clutch cover 40. Furthermore, the clutch cover 40 includes a support portion 40b for pivotally supporting a seat portion 44c of the assist spring 44 at an inner circumferential portion of the clutch cover 40. Still further, the clutch cover 40 includes a protruding portion 40c for supporting one end portion of the disc spring 43. The clutch cover 40 is formed so as not to contact the release lever 41 and the assist spring 44 when the release lever 41 and the assist spring 44 pivot.

The release lever 41 is pivotally supported by the clutch cover 40. The release lever 41 is arranged so that an outer circumferential portion thereof is positioned between the pressure plate 48 and the disc spring 43. The release lever 41 includes the force input portion 41 a, to which the pressing force of the release bearing 7 is applied, at a surface of the inner circumferential portion of the release lever 41 facing the release bearing 7. Furthermore, the release lever 41 includes the variable fulcrum portion 41b, at which the release lever 41 is pivotally supported by the variable fulcrum member 42 while allowing a position of the fulcrum to be displaced, on a surface of the inner mediate portion of the release lever 41 facing the pressure plate 48. The variable fulcrum portion 41b is set so that a contact position thereof relative to the variable fulcrum member 42 is displaced in a radially inner direction as the outer circumferential portion of the release lever 41 inclines towards the disc spring 43. The release lever 41 includes the force output portion 41c, at which the release lever 41 contacts the protruding portion 48a of the pressure plate 48, at the outer circumferential portion of the release lever 41. The release lever 41 is a component of the variable lever ratio mechanism 4. The position of the variable fulcrum portion 41b is displaced in the radially inner direction as the outer circumferential portion of the release lever 41 inclines towards the disc spring 43. On the other hand, the force input portion 41a and the force output portion 41 are not (are considered not to be) displaced in the radial direction. Accordingly, the lever ratio of the release lever 41 changes. Furthermore, the release lever 41 includes a protruding portion 41d at a surface of the outer circumferential portion of the release lever 41 facing opposite to the pressure plate 48, so that the release lever 41 is biased towards the pressure plate 48 at the protruding portion 41d by the disc spring 43. Accordingly, because the release lever 41 is biased by the disc spring 43, an inner circumferential portion of the release lever 41 pivots about the variable fulcrum portion 41b in a direction away from the pressure plate 48, thereby biasing the protruding portion 48a of the pressure plate 48 at the force output portion 41c of the release lever 41. On the other hand, in a case where the force output portion 41a of the release lever 41 is pressed by the release bearing 7, the inner circumferential portion of the release lever 41 pivots about the variable fulcrum portion 41b towards the pressure plate 48 and simultaneously, the outer circumferential portion of the release lever 41 pivots in the direction away from the pressure plate 48 and the disc spring 43 is compressed. Accordingly, the biasing of the protruding portion 48a of the pressure plate 48 relative to the force output portion 41c is cancelled.

The release lever 41 includes a bent portion 41e (i.e. a bent portion of the release lever 41 extending in the axial direction), which surrounds the assist spring 44 in a circumferential portion thereof so as to be spaced away from the assist spring 44 in the radial direction, at a portion between the force input portion 41a and the variable fulcrum portion 41b. The release lever 41 is pivotally retained by the seat portion 44b of the assist spring 44 at the bent portion 41e, so that the release lever 41 receives at least a component of the pressing force at the outer circumferential portion in response to an inclination of the assist spring 44. Accordingly, the pressing force of the assist spring 44 acts on the release lever 41 so as to pivot (rotate) towards the flywheel 5 in the case where the force input portion 41a of the release lever 41 pivots (rotates) about the variable fulcrum portion 41b towards the flywheel 5 from a state where the release lever 41 (i.e. a line (a surface) connecting the variable fulcrum portion 41b and the force output portion 41c) corresponds to (becomes in parallel with) a line (a surface) connecting the variable fulcrum portion 41b and the fulcrum of the seat portion 44c (i.e. a turnover point). On the other hand, in a case where the force input portion 41a of the release lever 41 pivots (rotates) about the variable fulcrum portion 41b towards the release bearing 7 from the state where the release lever 41 (i.e. the line (the surface) connecting the variable fulcrum portion 41b and the force output portion 41c) corresponds to (becomes in parallel with) the line (the surface) connecting the variable fulcrum portion 41b and the fulcrum of the seat portion 44c, the pressing force of the assist spring 44 acts on the release lever 41 so that the input portion 41a thereof pivots (rotates) towards the release bearing 7.

The variable fulcrum member 42 supports the release lever 41 while allowing the release lever 41 to pivot about the variable fulcrum portion 41b. The variable fulcrum member 42 is supported by the support portion 40a of the clutch cover 40. Furthermore, the variable fulcrum member 42 is formed in a shape by which the contact position thereof relative to the variable fulcrum portion 41b is displaced in the radially inner direction as the outer circumferential portion of the release lever 41 inclines towards the disc spring 43 (e.g. in this embodiment, the variable fulcrum member 42 is formed in a quarter-ellipse shape when being viewed in the vertical direction relative to a surface of Fig. 13). In other words, the variable fulcrum member 42 includes a curved surface so as to protrude towards the release lever 41, so that the variable fulcrum member 42 displaces the variable fulcrum portion 41b of the release lever 41 contacting the curved surface in response to an inclination of the release lever 41.

The disc spring 43, formed in a substantially coned shape and serving as a biasing member, biases the release lever 41 so as to press the pressure plate 48 toward the flywheel 5 at the force output portion 41c. The disc spring 43 is arranged between the clutch cover 40 and release lever 41. An outer circumferential end portion of the disc spring 43 contacts the protruding portion 40c of the clutch cover 40 and an inner circumferential end portion of the disc spring 43 contacts the protruding portion 41d of the release lever 41 so as to bias the release lever 41 towards the pressure plate 48. Biasing the release lever 41 by means of the disc spring 43 allows the force input portion 41a of the release lever 41 to pivot (rotate) about the variable fulcrum point 41b toward the pressure plate 48.

The assist spring 44 is a component of the assist mechanism 8 for assisting the operation load inputted to the force input portion 41a of the release lever 41 so as to resist against the biasing force generated by the disc spring 43. The assist spring 44 is provided within the bent portion 41 e, in other words, the assist spring 44 is arranged so as to be positioned radially inwardly of the bent portion 41e of the release lever 41. Furthermore, the assist spring 44 is provided between an outer circumferential wall surface of the bent portion 41e of the release lever 41 and the fulcrum thereof positioned in the inner circumferential portion (i.e. the fulcrum of the seat portion 44c) so as to be extendable and compressible therebetween, so that the assist spring 44 applies the rotational force to the outer circumferential wall surface of the bent portion 41e of the release lever 41 in response to the inclination of the assist spring 44 in order to generate the biasing force at the outer circumferential portion of the release lever 41 relative to the disc spring 43. Furthermore, the assist spring 44 includes the seat portions 44b and 44c and a spring 44a (e.g. a coil spring, an elastic member and the like). The spring 44a is provided between the seat portions 44b and 44c. The seat portion 44b pivotally supports the outer circumferential wall surface of the bent portion 41e of the release lever 41. The seat portion 44c is pivotally supported by the support portion 40b of the clutch cover 40. The assist spring 44 assists the release lever 41 so as to pivot (rotate) the force output portion 41c of the release lever 41 to pivot (rotate) towards the disc spring 43 in a case where the release bearing 7 presses the force input portion 41 a of the release lever 41 and the force input portion 41 a of the release lever 41 pivots (rotates) about the variable fulcrum portion 41b towards the flywheel 5 from the state where the release lever 41 (i.e. the line (the surface) connecting the variable fulcrum portion 41b and the force output portion 41c) corresponds to (becomes in parallel with) the line (the surface) connecting the variable fulcrum portion 41b and the fulcrum of the seat portion 44c.

The pressure plate 48 is configured so as to press the clutch disc 10 toward the flywheel 5 and sandwich the clutch disc 10 between the pressure plate 48 and the flywheel 5, thereby frictionally engaging the clutch disc 10 with the flywheel 5, so that the clutch disc 10 is rotated integrally with the flywheel 5. The pressure plate 48 is arranged to face the flywheel 5 via the clutch disc 10. Furthermore, the pressure plate 48 is connected to the clutch cover 40 by means of straps, so that the pressure plate 48 is rotated in response to a rotation of the clutch cover 40. The pressure plate 48 includes the protruding portion 48a for establishing a contact with the force output portion 41c of the release lever 41. The pressure plate 48 press-contacts (or, slidably contacts, in a case where the pressing force is low) with the friction member 11 of the clutch disc 10 while the pressure plate 48 is pressed towards the flywheel 5 by the release lever 41.

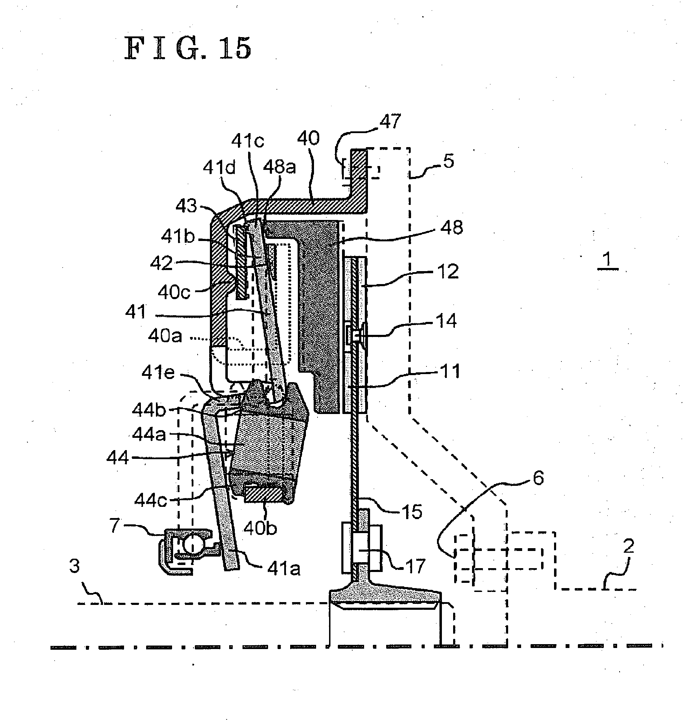

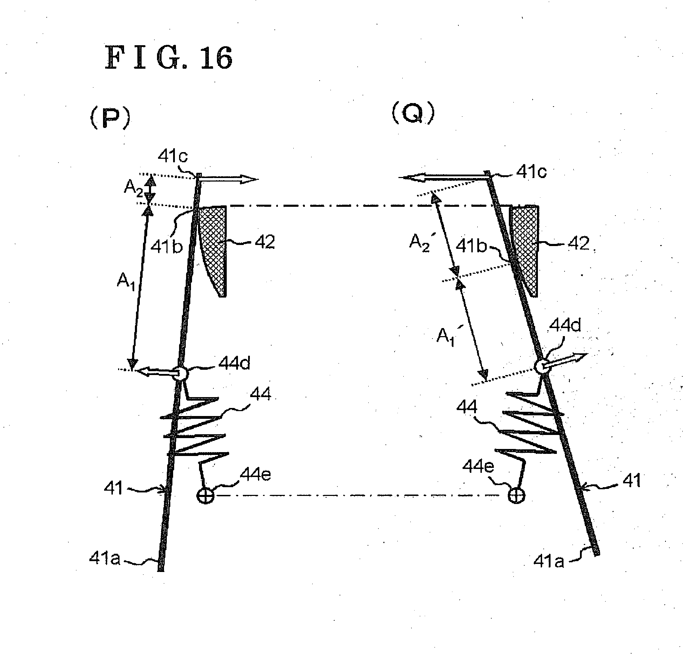

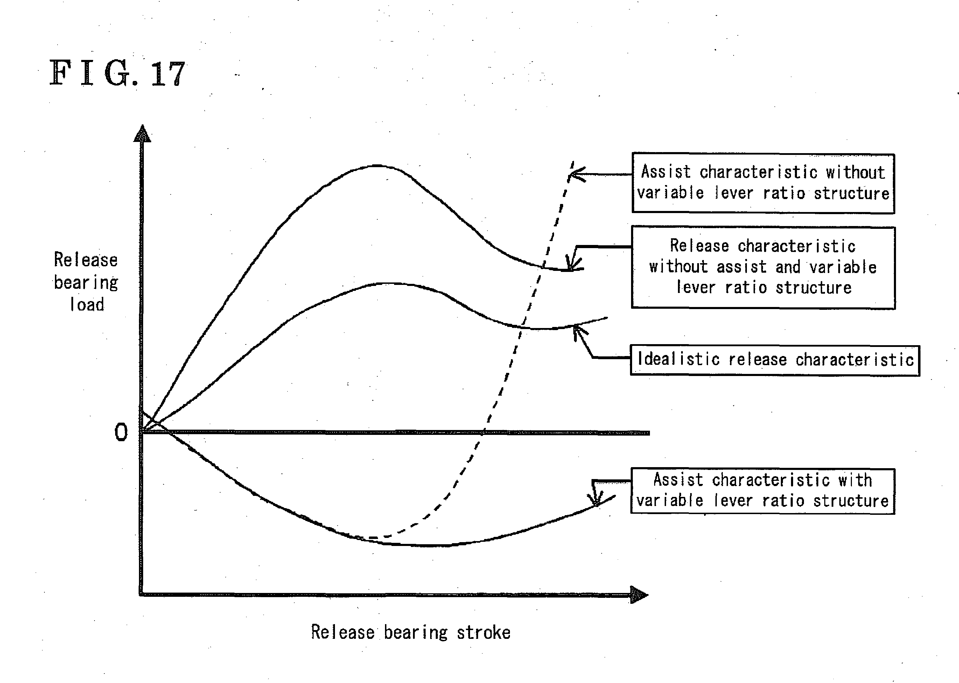

An operation of the clutch apparatus 1 according to the fifth embodiment will be described below with reference to the drawings. Illustrated in Fig. 15 is a diagram for explaining the operation of the clutch apparatus 1 according to the fifth embodiment. Illustrated in Fig. 16 is a schematic diagram for explaining changes in the assist lever ratio of the release lever 41 of the clutch apparatus 1 according to the fifth embodiment. The drawing indicated by (P) in Fig. 16 illustrates the engaged state of the clutch apparatus 1. On the other hand, the drawing indicated by (Q) in Fig. 16 illustrates the disengaged state of the clutch apparatus 1. Illustrated in Fig. 17 is a graph indicating the load characteristic of the release bearing 7 of the clutch apparatus 1 according to the fifth embodiment. Additionally, illustrated in Fig. 15 is the clutch apparatus 1 in the disengaged state (the engaged state of the clutch apparatus 1 is indicated by a broken line).

As illustrated in Fig. 13, in the case where the clutch apparatus 1 is in the engaged state (i.e. in the case where the operation portion such as the clutch lever, the clutch pedal and the like is not operated), the pressure plate 48 press-contacts the clutch disc 10, so that the rotational force is transmitted from the input shaft 2 to the output shaft 3. The pressing force (a force for pressing the pressure plate 48 to the clutch disc 10) is generated by the disc spring 43 and the assist spring 44. The load generated at the disc spring 43 is transmitted to the pressure plate 48 via the release lever 41. On the other hand, the component of the load generated at the assist spring 44 in the rotational direction about the variable fulcrum portion 41b is amplified on the basis of the lever ratio of the release lever 41 and then, transmitted to the pressure plate 48.

As illustrated in Fig. 15, in the case where the operation portion such as the clutch lever, the clutch pedal and the like (i.e. in the case where the manual operation of the clutch lever, the depressing operation of the clutch pedal and the like is performed) while the clutch apparatus 1 is in the engaged state, the release bearing 7 is displaced to the right in Fig. 15 via the mechanism such as the hydraulic pressure mechanism, the link mechanism and the like, so that the release bearing 7 presses the force input portion 41a of the release lever 41 towards the input shaft 2. Accordingly, the force output portion 41c of the release lever 41 pivots about the variable fulcrum portion 41b towards the disc spring 43, simultaneously, the disc spring 43 is compressed, so that the biasing of the protruding portion 48a of the pressure plate 48 relative to the force output portion 41c of the release lever 41 is cancelled based on the principle of the lever. As a result, the pressure plate 48 moves to the left in Fig. 15, the press-contact between the pressure plate 48 and the clutch disc 10 is cancelled, and the transmission of the rotational force from the input shaft 2 to the output shaft 3 is interrupted, thereby tuning the clutch apparatus 1 to be in the disengaged state. Additionally, the position of the variable fulcrum portion 41b is displaced in the radially inner direction as the outer circumferential portion of the release lever 41 inclines towards the disc spring 43. On the other hand, the force input portion 41 a and the force output portion 41c are not (are considered not to be) displaced in the radial direction. Accordingly, the lever ratio of the release lever 41 changes. Furthermore, in the process of the release bearing 7 pressing the force input portion 41a of the release lever 41, the pressing force of the assist spring 44 acts as the reaction force against the pressing force of the release bearing 7 until the release lever 41 (the line (the surface) connecting the variable fulcrum portion 41b and the force output portion 41c) corresponds to (becomes in parallel with) the line (the surface) connecting the variable fulcrum portion 41b and the fulcrum of the seat portion 44c of the assist spring 44 (i.e. the turnover point). Once the release lever 41 exceeds the turnover point, the pressing force of the assist spring 44 turns to act as the assisting force relative to the pressing force of the release bearing 7.

Changes in the assist lever ratio of the release lever 41 will be described below with reference to the drawings.

The assist lever ratio $R_{A1}$ of the release lever 41 in the case where the clutch apparatus 1 is in the engaged state (see the drawing (P) in Fig. 16) is calculated as follow:

$$R_{A1} = \frac{A_1}{A_2}$$

where "$A_1$" indicates a distance between a fulcrum portion 44d of the assist spring 44, to which the biasing force relative to the release lever 41 is applied, and the variable fulcrum portion 41b of the release lever 41 and "$A_2$" indicates a distance between the variable fulcrum portion 41b and the force output portion 41c of the release lever 41. Additionally, the assist lever ratio of the clutch apparatus 1 illustrated in Fig. 16 is set on the basis of the biasing force of the assist spring 44 as a reference and differs from the lever ratio that is based on the force input portion 41 a of the release lever 41 as a reference.

On the other hand, the assist lever ratio $R_{A2}$ of the release lever 41 in the case where the clutch apparatus 1 is in the disengaged state (see the drawing (Q) in Fig. 16) is calculated as follows:

$$R_{A2} = \frac{A_1'}{A_2'}$$

where "$A_1'$" indicates the distance between the fulcrum portion 44d of the assist spring 44, to which the biasing force relative to the release lever 41 is applied, and the variable fulcrum portion 41b of the release lever 41 and "$A_2'$" indicates the distance between the variable fulcrum portion 41 b and the force output portion 41c of the release lever 41.

Additionally, the distance "$A_1$" is se to so as to be greater than the distance "$A_1'$" (i.e. $A_1 > A_1'$) and the

distance "$A_2$" is set to be shorter than the distance "$A_2'$" (i.e. $A_2 < A_2'$). Therefore, the assist lever ratio $R_{A1}$ of the release lever 41 in the case where the clutch apparatus 1 is in the engaged state becomes greater than the assist lever ratio $R_{A2}$ in the case where the clutch apparatus 1 is in the disengaged state (i.e. $R_{A1} > R_{A2}$). Accordingly, the assist lever ratio of the release lever 41 continuously decreases as the clutch apparatus 1 turns into the disengaged state from the engaged state.

The load characteristic of the release bearing 7 in the case where the inner circumferential portion of the release lever 41 pivots towards the flywheel 5 so as to exceed the turnover point corresponds to an idealistic release characteristic illustrated in Fig. 17. The idealistic release characteristic is a characteristic obtained by subtracting "an assist characteristic of the clutch apparatus having the variable lever ratio structure (an absolute value)" from "a release characteristic of the clutch apparatus having no assist and no variable lever ratio structure (an absolute value)". The "release characteristic of the clutch apparatus having no assist and no variable lever ratio structure" indicates the load characteristic of the release bearing 7 in the case where the clutch apparatus 1 having the configuration illustrated in Fig. 13 does not receive the assisting force by the assist spring 44 and the lever ratio of the clutch apparatus 1 is not variable. On the other hand, the "assist characteristic of the clutch apparatus having the variable lever ratio structure" indicates the load characteristic of the release bearing 7 only in the case where the load of the assist spring 44 is applied to the clutch apparatus 1 having the structure illustrated in Fig. 13.

In a case where the assist lever ratio is set so that the "assist characteristic of the clutch apparatus having no variable lever ratio structure (see a broken line in Fig. 17)" has a minimum value (an assist maximum value) at the release bearing stroke at which a difference between the "release characteristic of the clutch apparatus having no assist and no variable lever ratio structure" and the "idealistic release characteristic" reaches a maximum, a value of the load turns to be a positive value from a negative value at a certain stroke. In a case where the load has a negative value, i.e. in a case where the load acts on the clutch apparatus 1 in an assist direction, the load of the assist spring 44 acts on the release lever 41 in a direction by which the outer circumferential portion of the release lever 41 is pressed towards the disc spring 43 in Fig. 15. An angle of the assist spring 44 is changed in a clockwise direction in Fig. 15 while a deformation of the assist spring 44 decreases (i.e. while a length of the spring 44a of the assist spring 44 is elongated) as a stroke of the release bearing 7 proceeds to the right in Fig. 15. Accordingly, an initial deformation of the assist spring 44 is cleared at a certain stroke and the length of the assist spring 44 becomes a natural length. Therefore, the assist spring 44 generates the load in a pulling direction in subsequent strokes. As a result, a direction of the load is reversed. In other words, the load direction of the assist spring 44 is influenced by the length of the assist spring 44 (i.e. whether the length of the assist spring is longer or shorter than the natural length thereof). The length of the assist spring 44 is influenced by the release bearing stroke and the release bearing stroke is influenced by the assist lever ratio. Therefore, the "idealistic release characteristic" may be obtained because, in a case where the assist lever ratio is set to be variable (set to be small) and the release bearing stroke is set to be small, the assist spring 44 normally generates the load only in the assist direction as indicated by the "assist characteristic of the clutch apparatus having the variable lever ratio structure" in Fig. 17.

In the case where the operation to the operation portion such as the clutch lever, the clutch pedal and the like (i.e. the manual operation of the clutch lever, the depressing operation of the clutch pedal and the like) is cancelled while the clutch apparatus 1 is in the disengaged state, the force output portion 41c of the release lever 41 pivots about the variable fulcrum portion 41b towards the pressure plate 48 by the biasing force of the disc spring 43, so that the release lever 41 presses the protruding portion 48a of the pressure plate 48 at the force output portion 41c, and the release lever 41 presses the release bearing 7 in the direction away from the pressure plate 48 at the force input portion 41a so as to press the release bearing 7 to the right in Fig. 15. As a result, the clutch apparatus 1 turns to be in the engaged state via the partially engaged state. Additionally, in the case where the release lever 41 presses the release bearing 7 at the force input portion 41a of the release lever 41, the pressing force of the assist spring 44 acts as the reaction force against the pressing force of the force input portion 41a of the release lever 41 until the release lever 41 reaches the turnover point. Once the release lever 41 exceeds the turnover point, the pressing force of the assist spring 44 acts as the assisting force relative to the pressing force generated at the force input portion 41c of the release lever 41. Furthermore, when the force input portion 41c of the release lever 41 is pressed against the pressure plate 48, the variable fulcrum portion 41b is displaced in the radially outer direction, so that the lever ratio and the assist lever ratio of the release lever 41 becomes greater.

According to the fifth embodiment, the clutch apparatus 1 achieves the idealistic load-stroke characteristic of the operation mechanism (e.g. the clutch pedal and the like) in the case where the assist lever ratio of the release lever 41 is set to be variable relative to the clutch cover 40 and the flexibility of the assist characteristic of the assist mechanism 8 relative to the clutch cover 40 is increased, in addition to advantages and merits similar to the clutch apparatus 1 according to the first embodiment. In other words, according to the fifth embodiment, a degree of the inclination of the release lever 41 (the stroke) and a range for setting a load peak point may be increased (i.e. the design freedom is increased), so that the release characteristic may be set to follow the idealistic characteristic. Furthermore, according to the fifth embodiment, a number of components used for the clutch apparatus 1 may be reduced when comparing to the clutch apparatus 1 of the first and third embodiments.

[Sixth embodiment]

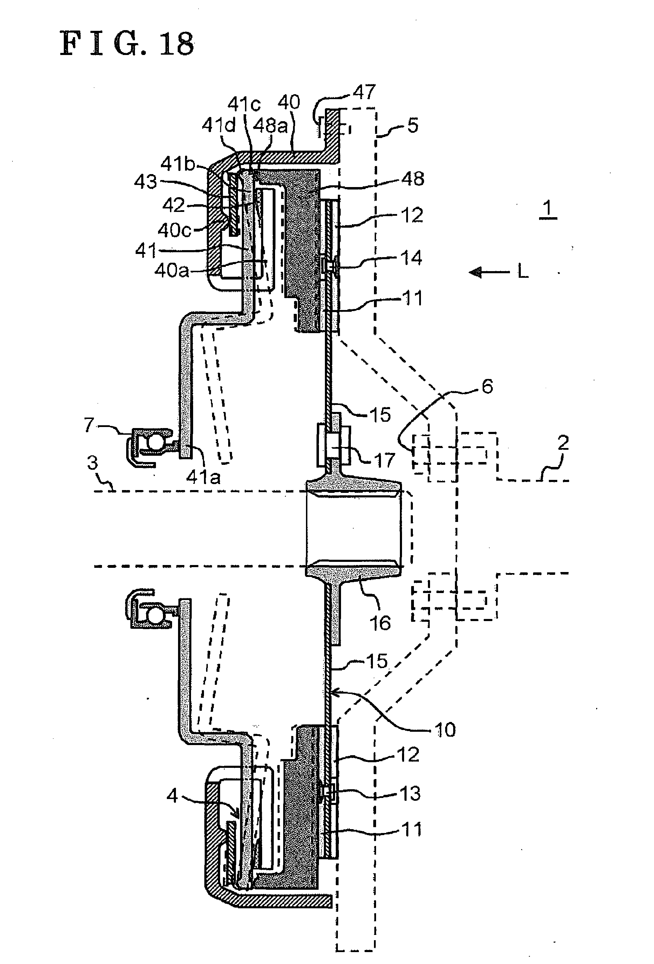

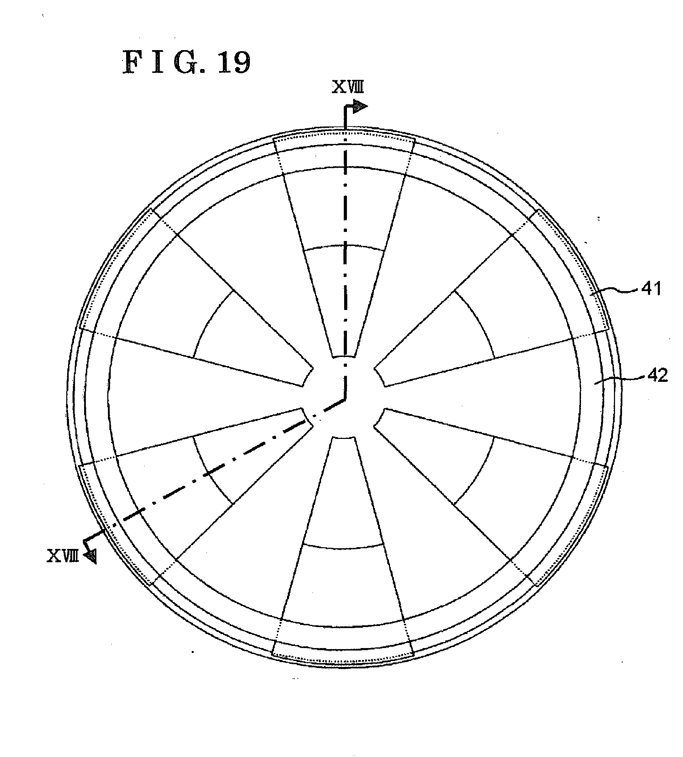

A sixth embodiment of the clutch apparatus 1 will be described below with reference to the drawings. Illustrated in Fig. 18 is a schematic cross-sectional diagram of a structure of the clutch apparatus 1 according to the sixth embodiment taken along line XVIII-XVIII in Fig. 19. Illustrated in Fig. 19 is a schematic plane view of the structure of the clutch apparatus 1 when being viewed in the axial direction (i.e. from a direction indicated by an arrow L in Fig. 18). Additionally, illustrated in Fig. 18 is the clutch apparatus 1 in the engaged state (the disengaged state of the clutch apparatus 1 is indicated by a broken line). Furthermore, the release lever 41 and the variable fulcrum member 42 of the clutch apparatus 1 are illustrated in Fig. 19.

The clutch apparatus 1 according to the sixth embodiment differs from the clutch apparatus 1 according to the fifth embodiment in that the clutch apparatus 1 of the sixth embodiment does not include the assist mechanism 8 (the mechanism that links to the assist spring 34, see Fig. 13) and the support portion 40b of the clutch cover 40 (see Fig. 13) of the clutch apparatus 1 according to the fifth embodiment. Other configurations and operations of the clutch apparatus 1 according to the sixth embodiment are similar to the clutch apparatus 1 according to the fifth embodiment. According to the sixth embodiment, as is the case with the fifth embodiment, the idealistic load-stroke characteristic of the operation mechanism (e.g. the clutch pedal and the like) may be achieved because the lever ratio of the release lever 41 relative to the clutch cover 40 is set to be variable and the flexibility of the load-stroke characteristic of the release bearing 7 is increased. Furthermore, according to the sixth embodiment, a number of components used for the clutch apparatus 1 may be reduced when comparing to the clutch apparatus 1 of the second and fourth embodiments.

[Seventh embodiment]

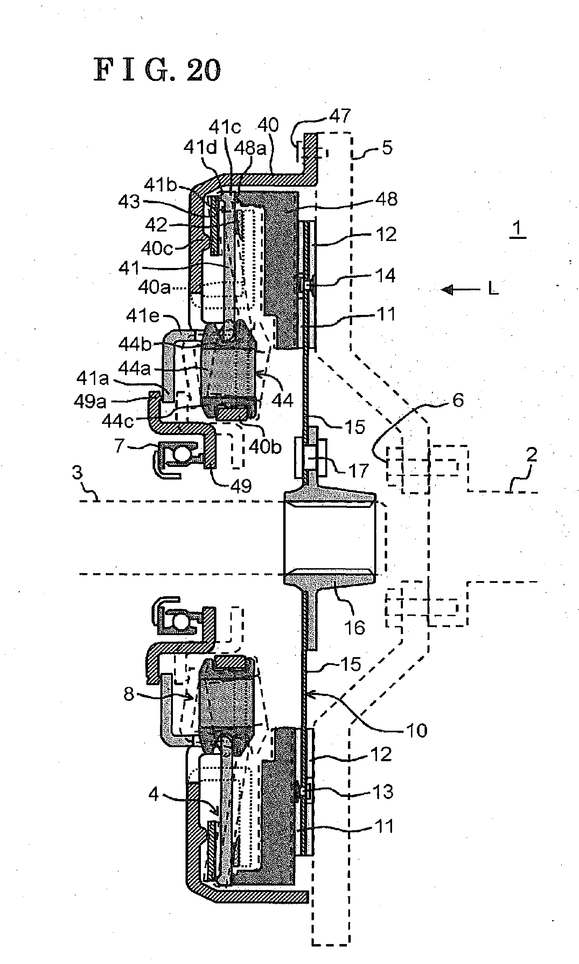

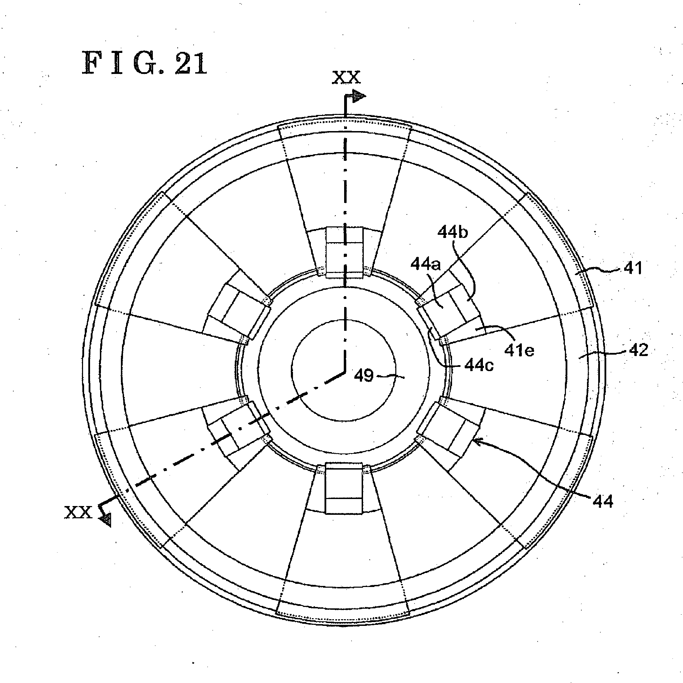

A seventh embodiment of the clutch apparatus 1 will be described below with reference to the drawings. Illustrated in Fig. 20 is a schematic cross-sectional diagram of a structure of the clutch apparatus 1 according to the seventh embodiment taken along line XX-XX in Fig. 21. Illustrated in Fig. 21 is a schematic plane view of the structure of the clutch apparatus 1 according to the seventh embodiment when being viewed in the axial direction (i.e. from a direction indicated by an arrow L in Fig. 20). Additionally, illustrated in Fig. 20 is the clutch apparatus 1 in the engaged state (the disengaged state of the clutch apparatus 1 is indicated by a broken line). The release lever 41, the variable fulcrum member 42, the assist spring 44 and a release adaptor 49 of the clutch apparatus 1 are mainly illustrated in Fig. 21.

The clutch apparatus 1 of the seventh embodiment is a modified example of the clutch apparatus 1 of the fifth embodiment (see Fig. 13). More specifically, the clutch apparatus 1 according to the seventh embodiment is configured so that the operation load of the release bearing 7 is transmitted to the force input portion 41a via the release adaptor 49 in order to freely set a position of the force input portion 41a of the release lever 41 in the radial direction. The release adaptor 49 is formed in an annular shape and arranged so as to surround the outer circumferential surface of the output shaft 3. The release adaptor 49 is configured so as to receive the operation load of the release bearing 7 at an inner circumferential portion of the release adaptor 49 and so as to press the force input portion 41a of the release lever 41 at a protruding portion 49a, which is provided at an outer circumferential portion of the release adaptor 49. Furthermore, the release adaptor 49 is configured so as to be movable in the axial direction in response to the operation of the release bearing 7 and is formed so as not to contact the support portion 40b of the clutch cover 40 and the assist spring 44. Other configurations and operations of the clutch apparatus 1 according to the seventh embodiment are similar to the clutch apparatus 1 according to the fifth embodiment. According to the seventh embodiment, the position of the force input portion 41a of the release lever 41 in the radial direction is freely set because the operation load of the release bearing 7 is transmitted to the force input portion 41a of the release lever 41 via the release adaptor 49, so that the lever ratio of the release lever 41 is freely set, in addition to advantages and merits similar to the fifth embodiment.

[Eighth embodiment]

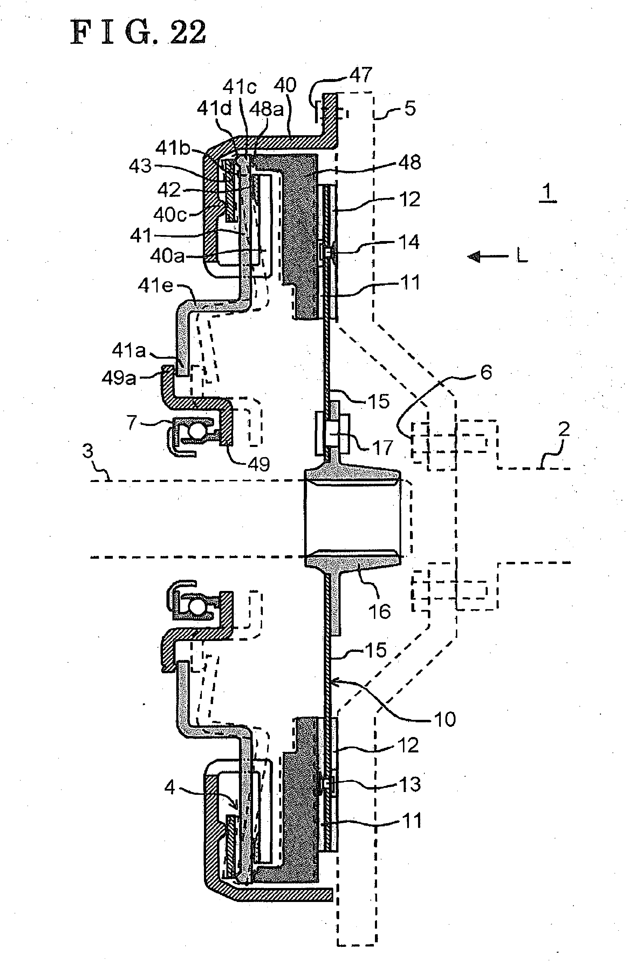

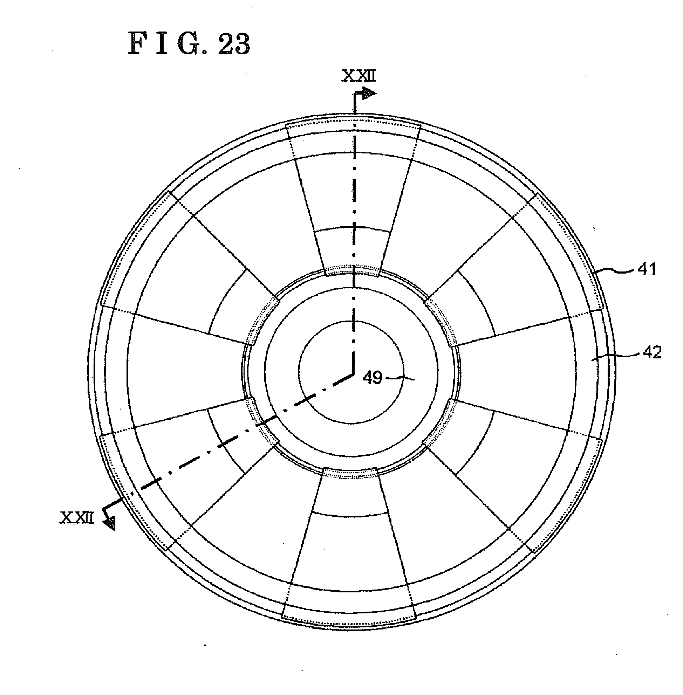

An eighth embodiment of the clutch apparatus 1 will be described below with reference to the drawings. Illustrated in Fig. 22 is a schematic cross-sectional diagram of a configuration of the clutch apparatus 1 according to the eighth embodiment taken along line XXII-XXII in Fig. 23. Illustrated in Fig. 23 is a schematic plane view of the configuration of the clutch apparatus 1 according to the eighth embodiment when being viewed in the axial direction (i.e. from a direction indicated by an arrow L in Fig. 22). Additionally, illustrated in Fig. 22 is the clutch apparatus 1 in the engaged state. The release lever 41, the variable fulcrum member 42 and the release adaptor 49 of the clutch apparatus 1 are mainly illustrated in Fig. 23.

The clutch apparatus 1 according to the eighth embodiment differs from the clutch apparatus 1 according to the seventh embodiment in that the clutch apparatus 1 of the eighth embodiment does not include the assist mechanism 8 (i.e. the mechanism that links to the assist spring 34) and the support portion 40b of the clutch apparatus 1 according to the seventh embodiment (see Fig. 20). Other configurations and operations of the clutch apparatus 1 according to the eighth embodiment are similar to the seventh embodiment. According to the eighth embodiment, as is the case with the first embodiment, the idealistic load-stroke characteristic of the operation mechanism (e.g. the clutch pedal and the like) may be achieved because the lever ratio of the release lever 41 relative to the clutch cover 40 is set to be variable and the flexibility of the load-stroke characteristic of the release bearing 7 is increased. Furthermore, according to the eighth embodiment, as is the case with the seventh embodiment, because the clutch apparatus 1 is configured so that the operation load of the release bearing 7 is transmitted to the force input portion 41a of the release lever 41 via the release adaptor 49, the position of the force input portion 41a of the release lever 41 is freely set, accordingly, the lever ratio of the release lever 41 is freely set.

Variations and changes may be made by others, and equivalents employed, without departing from the spirit of the disclosure (including the scopes of claims) based on the basic technological ideas of the disclosure. Furthermore, various combinations and selection from the disclosed elements may be made by other within the scope of this disclosure. Accordingly, it is expressly intended that all such variations, changes and equivalents which fall within the spirit and scope of the disclosure as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1.    A clutch apparatus (1) comprising:

a flywheel (5);
a pressure plate (28) arranged so as to face the flywheel (5);
a clutch disc (10) provided between the flywheel (5) and the pressure plate (28);
a clutch cover (20) rotated together with the flywheel (5) as a unit;
a variable lever ratio mechanism (4) provided within the clutch cover (20) and having a force input portion (21a, 25a), to which an operation load is inputted, a force output portion (21c, 25c) at which the variable lever ratio mechanism (4) presses the pressure plate (28) towards the flywheel (5), and a lever (21, 25), whose lever ratio is set to be variable; and
a biasing member (23) biasing the variable lever ratio mechanism (4) so that the variable lever ratio mechanism (4) presses the pressure plate (28) towards the flywheel (5) at the force output point (21 c, 25c),

wherein the variable lever ratio mechanism (4) includes a first release lever (21) having a force input portion (21a), to which the operation load is inputted, a fulcrum portion (21b), at which the first release lever (21) is pivotally retained by the clutch cover (20), and a force output portion (21c), at which the first release lever (21) presses the pressure plate (28) towards the flywheel (5) by a biasing force of the biasing member (23), and a second release lever (25) having a force input portion (25a), at which an operation load from a release bearing (7) is inputted, a fulcrum portion (25b), at which the second release lever (25) is pivotally retained by the clutch cover (20), and a force output portion (25c), at which the second release lever (25) presses the force input portion (21a) of the first release lever (21) in a direction against the biasing force of the biasing member (23), and the second release lever (25) is formed in a shape by which a contact position between the force input portion (21a) of the first release lever (21, 31) and the force output portion (25c) of the second release lever (25) is displaced in a radially outer direction as the second release lever (25, 35) inclines towards the first release lever (21, 31).

2. A clutch apparatus (1) comprising:

   a flywheel (5);
   a pressure plate (38) arranged so as to face the flywheel (5);
   a clutch disc (10) provided between the flywheel (5) and the pressure plate (38);
   a clutch cover (30) rotated together with the flywheel (5) as a unit;
   a variable lever ratio mechanism (4) provided within the clutch cover (30) and having a force input portion (31a, 35a), to which an operation load is inputted, a force output portion (31c, 35c) at which the variable lever ratio mechanism (4) presses the pressure plate (38) towards the flywheel (5), and a lever (31, 35), whose lever ratio is set to be variable; and
   a biasing member (33) biasing the variable lever ratio mechanism (4) so that the variable lever ratio mechanism (4) presses the pressure plate (38) towards the flywheel (5) at the force output portion (31c, 35c),

   wherein the variable lever ratio mechanism (4) includes a first release lever (31) having a force input portion (31 a), to which the operation load is inputted, a fulcrum portion (31 b), at which the first release lever (31) is pivotally retained by the clutch cover (30), and a force output portion (31 c), at which the first release lever (31) presses the pressure plate (38) towards the flywheel (5) by a biasing force of the biasing member (33), a second release lever (35) having a force input portion (35a), at which an operation load from a release bearing (7) is inputted, a fulcrum portion (35b), at which the second release lever (35) is pivotally retained by the clutch cover (30), and a force output portion (35c), at which the second release lever (35) presses the force input portion (31a) of the first release lever (31) in a direction against the biasing force of the biasing member (33), and a fulcrum member (36), which is supported by the clutch cover (30) and which is configured so as to displace a contact position of the fulcrum portion (35b) of the second release lever (35) relative to the fulcrum member (36) in a radially inner direction as the force output portion (35c) of the second release lever (35) inclines towards the first release lever (21).

3. The clutch apparatus (1) according to Claim 1 or Claim 2 further comprising an assist mechanism (8), which is arranged within the clutch cover (20, 30) and which assists the operation load inputted into the force input point (21a, 31a) of the first release lever (21, 31) so as to resist against the biasing force of the biasing member (23, 33).

4. The clutch apparatus (1) according to claim 3, wherein the assist mechanism (8) is pivotally supported by the clutch cover (20, 30) at one end portion of the assist mechanism (8) and is pivotally supported by the first release lever (21, 31) at the other end portion of the assist mechanism (8), and the assist mechanism (8) includes an assist spring (24, 34) for applying a rotational force to the first release lever (21, 31), so that the first release lever (21, 31) generates at least a biasing force at the outer end circumferential portion thereof.

5. A clutch apparatus (1) comprising:

   a flywheel (5);
   a pressure plate (48) arranged so as to face the flywheel (5);
   a clutch disc (10) provided between the flywheel (5) and the pressure plate (48);
   a clutch cover (40) rotated together with the flywheel (5) as a unit;
   a variable lever ratio mechanism (4) provided within the clutch cover (40) and having a force input portion (41a), to which an operation load is inputted, a force output portion (41c) at which the variable lever ratio mechanism (4) presses the pressure plate (48) towards the flywheel (5), and a lever (41), whose lever ratio is set to be variable; and

a biasing member (43) biasing the variable lever ratio mechanism (4) so that the variable lever ratio mechanism (4) presses the pressure plate (48) towards the flywheel (5) at the force output portion (41c),

wherein the variable lever ratio mechanism (4) includes a release lever (41) having a force input portion (41a), at which the operation load is inputted, a fulcrum portion (41b), at which the release lever (41) is pivotally retained by the clutch cover (40), and a force output portion (41c), at which the release lever (41) presses the pressure plate (48) towards the flywheel (5) by a biasing force of the biasing member (43), and a fulcrum member (42), which is supported by the clutch cover (40) and is configured so as to displace a contact position of the fulcrum member (42) relative to the fulcrum portion (41b) of the release lever (41) in a radially inner direction as the force output portion (41 c) of the release lever (41) inclines towards the biasing member (43).

6. The clutch apparatus (1) according to Claim 5 further comprising a release adaptor (49), wherein an operation load of a release bearing (7) is inputted into an inner circumferential portion of the release adaptor (49) and the release adaptor (49) is configured so as to press the force input portion (41a) of the release lever (41) at an outer circumferential portion of the release adaptor (49).

7. The clutch apparatus (1) according to Claim 5 or Claim 6 further comprising an assist mechanism (8), which is provided within the clutch cover (40) and which assists the operation load inputted to the force input portion (41a) of the release lever (41) so as to resist against the biasing force of the biasing member (43).

8. The clutch apparatus (1) according to Claim 7, wherein the release lever (41) is formed in a substantially annular shape and the assist mechanism (8) includes an assist spring (44), whose one end portion is pivotally supported by the clutch cover (40) and whose other end portion is pivotally supported by the release lever (41), applying a rotational force to the release lever (41) so that the release lever (41) generates at least a biasing force at an outer circumferential portion thereof.

**Patentansprüche**

1. Kupplungsvorrichtung (1), enthaltend:

 ein Schwungrad (5);
 eine Druckplatte (28), die derart angeordnet ist, dass sie dem Schwungrad (5) gegenüber liegt;

eine Kupplungsscheibe (10), die zwischen dem Schwungrad (5) und der Druckplatte (28) vorgesehen ist;
eine Kupplungsabdeckung (20), die sich zusammen mit dem Schwungrad (5) als eine Einheit dreht;
einen variablen Hebelverhältnismechanismus (4), der innerhalb der Kupplungsabdeckung (20) vorgesehen ist und einen Krafteingangsbereich (21a, 25a) aufweist, dem eine Betriebslast zugeführt wird, einen Kraftausgangsbereich (21c, 25c) aufweist, an dem der variable Hebelverhältnismechanismus (4) die Druckplatte (28) in Richtung des Schwungrads (5) drückt, und einen Hebel (21, 25) aufweist, dessen Hebelverhältnis festgesetzt ist, dass es variabel ist; und
ein Vorspannelement (23), das den variablen Hebelverhältnismechanismus (4) derart vorspannt, dass der variable Hebelverhältnismechanismus (4) die Druckplatte (28) in Richtung des Schwungrads (5) an dem Kraftausgangsbereich (21c, 25c) drückt,
wobei der variable Hebelverhältnismechanismus (4) einen ersten Freigabehebel (21) aufweist mit einem Krafteingangsbereich (21a), dem die Betriebslast zugeführt wird, einem Drehachsenbereich (21 b), an dem der erste Freigabehebel (21) schwenkbar von der Kupplungsabdeckung (20) gehalten ist, und einem Kraftausgangsbereich (21c), an dem der erste Freigabehebel (21) die Druckplatte (28) in Richtung des Schwungrads (5) mittels einer Vorspannkraft des Vorspannelements (23) drückt, und einen zweiten Freigabehebel (25) aufweist mit einem Krafteingangsbereich (25a), dem eine Betriebslast von einem Ausrücklager (7) zugeführt wird, einem Drehachsenbereich (25b), an dem der zweite Freigabehebel (25) schwenkbar von der Kupplungsabdeckung (20) gehalten ist, und einem Kraftausgangsbereich (25c), an dem der zweite Freigabehebel (25) den Krafteingangsbereich (21 a) des ersten Freigabehebels (21) in eine Richtung gegen die Vorspannkraft des Vorspannelements (23) drückt, und der zweite Freigabehebel (25) eine Form aufweist, durch die eine Berührposition zwischen dem Krafteingangsbereich (21a) des ersten Freigabehebels (21, 31) und dem Kraftausgangsbereich (25c) des zweiten Freigabehebels (25) in einer radial nach außen gerichteten Richtung verschoben wird, da der zweite Freigabehebel (25, 35) in Richtung des ersten Freigabehebels (21, 31) geneigt ist.

2. Kupplungsvorrichtung (1, enthaltend:

 ein Schwungrad (5);
 eine Druckplatte (38), die derart angeordnet ist, dass sie dem Schwungrad (5) gegenüber liegt; eine Kupplungsscheibe (10), die zwischen dem Schwungrad (5) und der Druckplatte (38) vorgesehen ist; eine Kupplungsabdeckung (30), die sich zusammen mit dem Schwungrad (5) als eine Einheit dreht; einen variablen Hebelverhältnismechanismus (4), der innerhalb der Kupplungsabdeckung (30) vorgesehen ist und einen Krafteingangsbereich (31a, 35a) aufweist, dem eine Betriebslast zugeführt wird, einen Kraftausgangsbereich (31c, 35c) aufweist, an dem der variable Hebelverhältnismechanismus (4) die Druckplatte (38) in Richtung des Schwungrads (5) drückt, und einen Hebel (31, 35) aufweist, dessen Hebelverhältnis festgesetzt ist, dass es variabel ist; und ein Vorspannelement (33), das den variablen Hebelverhältnismechanismus (4) derart vorspannt, dass der variable Hebelverhältnismechanismus (4) die Druckplatte (38) in Richtung des Schwungrads (5) an dem Kraftausgangsbereich (31c, 35c) drückt, wobei der variable Hebelverhältnismechanismus (4) einen ersten Freigabehebel (31) aufweist mit einem Krafteingangsbereich (31a), dem die Betriebslast zugeführt wird, einem Drehachsenbereich (31b), an dem der erste Freigabehebel (31) schwenkbar von der Kupplungsabdeckung (30) gehalten ist, und einem Kraftausgangsbereich (31c), an dem der erste Freigabehebel (31) die Druckplatte (38) in Richtung des Schwungrads (5) mittels einer Vorspannkraft des Vorspannelements (33) drückt, einen zweiten Freigabehebel (35) aufweist mit einem Krafteingangsbereich (35a), dem eine Betriebslast von einem Ausrücklager (7) zugeführt wird, einem Drehachsenbereich (35b), an dem der zweite Freigabehebel (35) schwenkbar von der Kupplungsabdeckung (30) gehalten ist, und einem Kraftausgangsbereich (35c), an dem der zweite Freigabehebel (35) den Krafteingangsbereich (31a) des ersten Freigabehebels (31) in eine Richtung gegen die Vorspannkraft des Vorspannelements (33) drückt, und ein Drehachsenelement (36) aufweist, das von der Kupplungsabdeckung (30) gehalten ist und das derart ausgestaltet ist, dass es eine Berührungsposition des Drehachsenbereichs (35b) des zweiten Freigabehebels (35) relativ zu dem Drehachsenelement (36) in einer radial nach innen gerichteten Richtung verschiebt, da der Kraftausgangsbereich (35c) des zweiten Freigabehebels (35) in Richtung des ersten Freigabehebels (21) geneigt ist.

3. Kupplungsvorrichtung (1) nach Anspruch 1 oder Anspruch 2, ferner enthaltend einen Hilfsmechanismus (8), der innerhalb der Kupplungsabdeckung (20, 30) angeordnet ist und der der Betriebslast, die dem Krafteingangspunkt (21a, 31a) des ersten Freigabehebels (21, 31) zugeführt wird, hilft, so dass sie sich der Vorspannkraft des Vorspannelements (23, 33) widersetzt.

4. Kupplungsvorrichtung (1) nach Anspruch 3, wobei der Hilfsmechanismus (8) drehbar von der Kupplungsabdeckung (20, 30) an einem Endbereich des Hilfsmechanismus (8) gehalten ist und drehbar von dem ersten Freigabehebel (21, 31) an dem anderen Endbereich des Hilfsmechanismus (8) gehalten ist, und der Hilfsmechanismus (8) eine Hilfsfeder (24, 34) zum Aufbringen einer Drehkraft auf den ersten Freigabehebel (21, 31) aufweist, so dass der erste Freigabehebel (21, 31) wenigstens eine Vorspannkraft an seinem äußeren Umfangsendbereich erzeugt.

5. Kupplungsvorrichtung (1), enthaltend:

ein Schwungrad (5); eine Druckplatte (48), die derart angeordnet ist, dass sie dem Schwungrad (5) gegenüber liegt; eine Kupplungsscheibe (10), die zwischen dem Schwungrad (5) und der Druckplatte (48) vorgesehen ist; eine Kupplungsabdeckung (40), die sich zusammen mit dem Schwungrad (5) als eine Einheit dreht; einen variablen Hebelverhältnismechanismus (4), der innerhalb der Kupplungsabdeckung (40) vorgesehen ist und einen Krafteingangsbereich (41a, 45a) aufweist, dem eine Betriebslast zugeführt wird, einen Kraftausgangsbereich (41c, 45c) aufweist, an dem der variable Hebelverhältnismechanismus (4) die Druckplatte (48) in Richtung des Schwungrads (5) drückt, und einen Hebel (41, 45) aufweist, dessen Hebelverhältnis festgesetzt ist, dass es variabel ist; und ein Vorspannelement (43), das den variablen Hebelverhältnismechanismus (4) derart vorspannt, dass der variable Hebelverhältnismechanismus (4) die Druckplatte (48) in Richtung des Schwungrads (5) an dem Kraftausgangsbereich (41c, 45c) drückt, wobei der variable Hebelverhältnismechanismus (4) einen Freigabehebel (41) aufweist mit einem Krafteingangsbereich (41a), dem die Betriebslast zugeführt wird, einem Drehachsenbereich (41b), an dem der Freigabehebel (41) schwenkbar von der Kupplungsabdeckung (40) gehalten ist, und einem Kraftausgangsbereich (41c), an dem der Freigabehebel (41) die Druckplatte (48) in Richtung des Schwungrads (5) mittels einer Vorspannkraft des Vorspannelements (43) drückt, und ein Drehachsenelement (42) aufweist, das von der Kupplungsabdeckung (40) gehalten ist und das derart ausgestaltet ist, dass es eine Berührposition des Drehachsenelements (42) relativ zu dem Drehachsenbereich (41 b) des Freigabehebels (41) in einer radial nach innen gerichteten Richtung verschiebt, da der Kraftausgangsbereich (41 c) des Freigabehebels (41) in Richtung des Vorspannelements (43) geneigt ist.

6. Kupplungsvorrichtung (1) nach Anspruch 5, ferner enthaltend einen Freigabeadapter (49), wobei eine Betriebslast eines Ausrücklagers (7) einem inneren Umfangsbereich des Freigabeadapters (49) zugeführt wird und der Freigabeadapter (49) derart ausgestaltet ist, dass er den Krafteingangsbereich (41a) des Freigabehebels (41) an einen äußeren Umfangsbereich des Freigabeadapters (49) drückt.

7. Kupplungsvorrichtung (1) nach Anspruch 5 oder Anspruch 6, ferner enthaltend einen Hilfsmechanismus (8), der innerhalb der Kupplungsabdeckung (40) vorgesehen ist und der der Betriebslast, die dem Krafteingangsbereich (41 a) des Freigabehebels (41) zugeführt wird, hilft, so dass sie sich der Vorspannkraft des Vorspannelements (43) widersetzt.

8. Kupplungsvorrichtung (1) nach Anspruch 7, wobei der Freigabehebel (41) in einer im Wesentlichen ringförmigen Form ausgebildet ist und der Hilfsmechanismus (8) eine Hilfsfeder (44) aufweist, deren einer Endbereich schwenkbar von der Kupplungsabdeckung (40) gehalten ist und deren anderer Endbereich schwenkbar von dem Freigabehebel (41) gehalten ist, die eine Drehkraft auf den Freigabehebel (41) ausübt, so dass der Freigabehebel (41) wenigstens eine Vorspannkraft an seinem äußeren Umfangsbereich erzeugt.

**Revendications**

1. Appareil d'embrayage (1) comprenant :

un volant moteur (5) ;
un plateau d'embrayage (28) agencé de façon à faire face au volant moteur (5) ;
un disque d'embrayage (10) prévu entre le volant moteur (5) et le plateau d'embrayage (28) ;
un couvercle d'embrayage (20) mis en rotation conjointement avec le volant moteur (5) comme un tout ;
un mécanisme de rapport de levier variable (4) prévu au sein du couvercle d'embrayage (20) et ayant une portion d'entrée de force (21a, 25a), à laquelle une charge de fonctionnement est fournie en entrée, une portion de sortie de force (21c, 25c) au niveau de laquelle le mécanisme de rapport de levier variable (4) pousse le plateau d'embrayage (28) vers le volant moteur (5), et un levier (21, 25) dont le rapport de levier est établi afin d'être variable ; et
un organe de sollicitation (23) sollicitant le mécanisme de rapport de levier variable (4) de sorte que le mécanisme de rapport de levier variable (4) pousse le plateau d'embrayage (28) vers le volant moteur (5) au niveau du point de sortie de force (21c, 25c),
dans lequel le mécanisme de rapport de levier variable (4) inclut un premier levier de débrayage (21) ayant une portion d'entrée de force (21a), à laquelle la charge de fonctionnement est fournie en entrée, une portion de point d'appui (21b), au niveau de laquelle le premier levier de débrayage (21) est retenu avec faculté de pivotement par le couvercle d'embrayage (20), et une portion de sortie de force (21c), au niveau de laquelle le premier levier de débrayage (21) pousse le plateau d'embrayage (28) vers le volant moteur (5) grâce à une force de sollicitation de l'organe de sollicitation (23), et un second levier de débrayage (25) ayant une portion d'entrée de force (25a), au niveau de laquelle une charge de fonctionnement provenant d'une butée de débrayage (7) est fournie en entrée, une portion de point d'appui (25b), au niveau de laquelle le second levier de débrayage (25) est retenu avec faculté de pivotement par le couvercle d'embrayage (20), et une portion de sortie de force (25c) au niveau de laquelle le second levier de débrayage (25) pousse la portion d'entrée de force (21a) du premier levier de débrayage (21) dans une direction contre la force de sollicitation de l'organe de sollicitation (23), et le second levier de débrayage (25) a une forme grâce à laquelle une position de contact entre la portion d'entrée de force (21a) du premier levier de débrayage (21, 31) et la portion de sortie de force (25c) du second levier de débrayage (25) est déplacée dans une direction radialement externe à mesure que le second levier de débrayage (25, 35) s'incline vers le premier levier de débrayage (21, 31).

2. Appareil d'embrayage (1) comprenant :

un volant moteur (5) ;
un plateau d'embrayage (38) agencé de façon à faire face au volant moteur (5) ;
un disque d'embrayage (10) prévu entre le volant moteur (5) et le plateau d'embrayage (38) ;
un couvercle d'embrayage (30) mis en rotation conjointement avec le volant moteur (5) comme un tout ;
un mécanisme de rapport de levier variable (4) prévu au sein du couvercle d'embrayage (30) et ayant une portion d'entrée de force (31a, 35a), à laquelle une charge de fonctionnement est fournie en entrée, une portion de sortie de force (31c, 35c) au niveau de laquelle le mécanisme de rapport de levier variable (4) pousse le plateau d'embrayage (38) vers le volant moteur (5), et un levier (31, 35) dont le rapport de levier est établi afin d'être variable ; et

un organe de sollicitation (33) sollicitant le mécanisme de rapport de levier variable (4) de sorte que le mécanisme de rapport de levier variable (4) pousse le plateau d'embrayage (38) vers le volant moteur (5) au niveau du point de sortie de force (31c, 35c),

dans lequel le mécanisme de rapport de levier variable (4) inclut un premier levier de débrayage (31) ayant une portion d'entrée de force (31a), à laquelle la charge de fonctionnement est fournie en entrée, une portion de point d'appui (31b), au niveau de laquelle le premier levier de débrayage (31) est retenu avec faculté de pivotement par le couvercle d'embrayage (30), et une portion de sortie de force (31c), au niveau de laquelle le premier levier de débrayage (31) pousse le plateau d'embrayage (38) vers le volant moteur (5) grâce à une force de sollicitation de l'organe de sollicitation (33), un second levier de débrayage (35) ayant une portion d'entrée de force (35a), au niveau de laquelle une charge de fonctionnement provenant d'une butée de débrayage (7) est fournie en entrée, une portion de point d'appui (35b), au niveau de laquelle le second levier de débrayage (35) est retenu avec faculté de pivotement par le couvercle d'embrayage (30), et une portion de sortie de force (35c) au niveau de laquelle le second levier de débrayage (35) pousse la portion d'entrée de force (31a) du premier levier de débrayage (31) dans une direction contre la force de sollicitation de l'organe de sollicitation (33), et un organe de point d'appui (36), qui est supporté par le couvercle d'embrayage (30) et qui est configuré de façon à déplacer une position de contact de la portion de point d'appui (35b) du second levier de débrayage (35) par rapport à l'organe de point d'appui (36) dans une direction radialement interne à mesure que la portion de sortie de force (35c) du second levier de débrayage (35) s'incline vers le premier levier de débrayage (21).

3. Appareil d'embrayage (1) selon la revendication 1 ou la revendication 2, comprenant en outre un mécanisme de rappel (8), qui est agencé au sein du couvercle d'embrayage (20, 30) et qui aide la charge de fonctionnement fournie en entrée dans le point d'entrée de force (21a, 31a) du premier levier de débrayage (21, 31) de façon à résister à la force de sollicitation de l'organe de sollicitation (23, 33).

4. Appareil d'embrayage (1) selon la revendication 3, dans lequel le mécanisme de rappel (8) est supporté avec faculté de pivotement par le couvercle d'embrayage (20, 30) au niveau d'une portion d'extrémité du mécanisme de rappel (8) et est supporté avec faculté de pivotement par le premier levier de débrayage (21, 31) au niveau de l'autre portion d'extrémité du mécanisme de rappel (8), et le mécanisme de rappel (8) inclut un ressort de rappel (24, 34) destiné à appliquer une force de rotation au premier levier de débrayage (21, 31) de sorte que le premier levier de débrayage (21, 31) génère au moins une force de sollicitation au niveau de sa portion circonférentielle d'extrémité externe.

5. Appareil d'embrayage (1) comprenant :

   un volant moteur (5) ;
   un plateau d'embrayage (48) agencé de façon à faire face au volant moteur (5) ;
   un disque d'embrayage (10) prévu entre le volant moteur (5) et le plateau d'embrayage (48) ;
   un couvercle d'embrayage (40) mis en rotation conjointement avec le volant moteur (5) comme un tout ;
   un mécanisme de rapport de levier variable (4) prévu au sein du couvercle d'embrayage (40) et ayant une portion d'entrée de force (41a), à laquelle une charge de fonctionnement est fournie en entrée, une portion de sortie de force (41c) au niveau de laquelle le mécanisme de rapport de levier variable (4) pousse le plateau d'embrayage (48) vers le volant moteur (5), et un levier (41) dont le rapport de levier est établi afin d'être variable ; et
   un organe de sollicitation (43) sollicitant le mécanisme de rapport de levier variable (4) de sorte que le mécanisme de rapport de levier variable (4) pousse le plateau d'embrayage (48) vers le volant moteur (5) au niveau du point de sortie de force (41c), dans lequel le mécanisme de rapport de levier variable (4) inclut un levier de débrayage (41) ayant une portion d'entrée de force (41a), à laquelle la charge de fonctionnement est fournie en entrée, une portion de point d'appui (41b), au niveau de laquelle le levier de débrayage (41) est retenu avec faculté de pivotement par le couvercle d'embrayage (40), et une portion de sortie de force (41c), au niveau de laquelle le levier de débrayage (41) pousse le plateau d'embrayage (48) vers le volant moteur (5) grâce à une force de sollicitation de l'organe de sollicitation (43), et un organe de point d'appui (42), qui est supporté par le couvercle d'embrayage (40) et est configuré de façon à déplacer une position de contact de l'organe de point d'appui (42) par rapport à la portion de point d'appui (41b) du levier de débrayage (41) dans une direction radialement interne à mesure que la portion de sortie de force (41c) du levier de débrayage (41) s'incline vers l'organe de sollicitation (43).

6. Appareil d'embrayage (1) selon la revendication 5, comprenant en outre un adaptateur de débrayage (49), dans lequel une charge de fonctionnement d'une butée de débrayage (7) est fournie en entrée dans une portion circonférentielle interne de l'adaptateur de débrayage (49) et l'adaptateur de débrayage (49) est configuré de façon à appuyer sur la portion d'entrée de force (41a) du levier de débrayage (41) au niveau d'une portion circonférentielle externe de l'adaptateur de débrayage (49).

7. Appareil d'embrayage (1) selon la revendication 5 ou la revendication 6, comprenant en outre un mécanisme de rappel (8) qui est prévu au sein du couvercle d'embrayage (40) et qui aide la charge de fonctionnement fournie en entrée à la portion d'entrée de force (41a) du levier de débrayage (41) de façon à résister à la force de sollicitation de l'organe de sollicitation (43).

8. Appareil d'embrayage (1) selon la revendication 7, dans lequel le levier de débrayage (41) a une forme sensiblement annulaire et le mécanisme de rappel (8) inclut un ressort de rappel (44), dont une portion d'extrémité est supportée avec faculté de pivotement par le couvercle d'embrayage (40) et dont l'autre portion d'extrémité est supportée avec faculté de pivotement par le levier de débrayage (41), appliquant une force de rotation au levier de débrayage (41) de sorte que le levier de débrayage (41) génère au moins une force de sollicitation au niveau d'une portion circonférentielle externe de celui-ci.

# FIG.1

# F I G. 2

## F I G. 3

FIG. 4

# F I G. 5

Release bearing load

P

Idealistic release characteristic

Release characteristic with assist and without variable lever ratio structure

Release bearing stroke

# FIG.6

FIG. 7

# F I G. 8

## F I G. 9

# F I G. 10

# FIG. 11

# FIG. 12

# F I G. 13

# F I G. 14

F I G. 15

FIG. 16

(P)

41c

$A_2$

41b

42

$A_1$

44d

44

44e

41

41a

(Q)

41c

$A_2{}'$

41b

42

$A_1{}'$

44d

44

44e

41

41a

# F I G. 17

Release bearing stroke

EP 2 299 137 B1

# F I G. 18

F I G. 19

# F I G. 20

F I G. 21

# FIG. 22

F I G. 23

**EP 2 299 137 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002181075 A

- US 20030047405 A1